# EUROPÄISCHE PATENTSCHRIFT

(11) **EP 3 944 997 B1**
(45) Veröffentlichungstag und Bekanntmachung des Hinweises auf die Patenterteilung: **18.09.2024**
(21) Anmeldenummer: 21187706.3
(22) Anmeldetag: 26.07.2021
(51) Int. Cl.: B60T 13/14, B60T 8/40, B60T 8/48, B60T 13/66, B60T 13/68

(54) **FAHRZEUGBREMSANLAGE UND LANDWIRTSCHAFTLICHES ZUGFAHRZEUG**
VEHICLE BRAKE SYSTEM AND AGRICULTURAL TRACTOR
INSTALLATION DE FREINAGE DE VÉHICULE ET VÉHICULE TRACTEUR AGRICOLE

(30) Priorität: 27.07.2020 DE 102020119750
(43) Veröffentlichungstag der Anmeldung: 02.02.2022
(73) Patentinhaber: Deere & Company, Moline, IL 61265 (US)
(72) Erfinder: BRITSCH, SEBASTIAN, 68163 Mannheim (DE); SCHNELL, MICHAELA, 68163 Mannheim (DE)
(74) Vertreter: Stein, Stefan

(56) Entgegenhaltungen:
- DE-A1- 102013 201 440
- DE-A1- 102018 111 451
- DE-A1- 3 034 628

## Beschreibung

Die Erfindung betrifft eine Fahrzeugbremsanlage gemäss dem Oberbegriff des unabhängigen Anspruchs 1 und ein landwirtschaftliches Zugfahrzeug gemäss dem Oberbegriff des unabhängigen Anspruchs 14.

Bekannte Fahrzeugbremsanlagen in landwirtschaftlichen Zugfahrzeugen umfassen Ventilanordnungen zum Bremsen, insbesondere mit einer ersten und/oder zweiten Ventileinrichtung bzw. Ventilen, die insbesondere in einer Kabine des Zugfahrzeugs angeordnet sind. Aufgrund dieser Anordnung der Ventilanordnungen weist die Fahrzeugbremsanlage eine komplexe Führung der Leitungen und Anschlüsse auf, d.h. die Hydraulikversorgung und die Radzylinder zum Bremsen eines Rades können an einem Fahrgestell angeordnet und ein Grossteil der Ventilanordnung in der Kabine. Nachteile der bekannten Ventilanordnung sind somit, dass diese einen grossen Einbauraum in der Kabine, insbesondere am Bremspedal, benötigen und hydraulische Störgeräusche in die Kabine übertragen. Das der Erfindung zu Grunde liegende Problem wird somit darin gesehen eine Fahrzeugbremsanlage und ein landwirtschaftliches Zugfahrzeug bereitzustellen, die bekannten Fahrzeugbremsanlagen und landwirtschaftlichen Zugfahrzeug optimieren. Die DE 10 2018 111 451 A1 offenbart eine Bremseinrichtung einer mobilen Arbeitsmaschine mit mindestens zwei Bremskreisen einer Betriebsbremse.

Ausgehend von diesem Stand der Technik ist es daher eine Aufgabe der vorliegenden Erfindung eine Fahrzeugbremsanlage und ein landwirtschaftliches Zugfahrzeug vorzuschlagen, welche die aus dem Stand der Technik bekannten Nachteile weitgehend vermeidet, insbesondere eine Fahrzeugbremsanlage und ein landwirtschaftliches Zugfahrzeug vorzuschlagen, die konstruktiv einfacher ausgestaltet sind, beispielsweise temperaturunabhängig und/oder wartungsfrei sind, und/oder weniger Einbauraum benötigen und/oder Störgeräusche verringern und/oder vermeiden.

Diese Aufgabe wird durch eine Fahrzeugbremsanlage mit den Merkmalen des Anspruchs 1 und ein und ein landwirtschaftliches Zugfahrzeug mit den Merkmalen des Anspruchs 14 gelöst.

Die abhängigen Ansprüche beziehen sich auf besonders vorteilhafte Ausführungsformen der Erfindung.

Erfindungsgemäß wird eine Fahrzeugbremsanlage vorgeschlagen. Die Fahrzeugbremsanlage umfasst einen ersten Hauptzylinder mit einem ersten Hauptzylinderanschluss und eine erste Betätigungseinrichtung mit einem ersten Betätigungsanschluss. Der erste Hauptzylinderanschluss ist in Strömungsverbindung mit dem ersten Betätigungsanschluss, diese sind also insbesondere strömungsverbunden, und die erste Betätigungseinrichtung ist mit dem ersten Hauptzylinder betreibbar, bevorzugt derart einstellbar und/oder verstellbar, besonders bevorzugt betätigbar. Die Fahrzeugbremsanlage umfasst weiter einen ersten Bremskreis, insbesondere einen hydraulischen Bremskreis, der zwischen einer Pumpe und einem ersten Radzylinder, insbesondere einem ersten hydraulischen Radzylinder, vorgesehen ist, insbesondere angeordnet ist. Die Pumpe ist dabei im ersten Bremskreis betreibbar, insbesondere auch angeordnet, um Druck zu erzeugen und ein Fluid, insbesondere Hydraulikflüssigkeit oder Hydrauliköl, innerhalb des ersten Bremskreises zu bewegen. Im ersten Bremskreis ist ausserdem eine erste Ventileinrichtung vorgesehen, insbesondere angeordnet. Die erste Ventileinrichtung ist zwischen einer ersten Konfiguration, also insbesondere eine erste Schaltstellung, in der eine Strömungsverbindung zwischen der Pumpe und dem ersten Radzylinder hergestellt ist, insbesondere mittels der ersten Ventileinrichtung hergestellt ist, und einer zweiten Konfiguration, insbesondere einer zweiten Schaltstellung, beweglich, in der eine Strömungsverbindung zwischen der Pumpe und dem ersten Radzylinder verhindert ist, insbesondere mittels der ersten Ventileinrichtung verhindert ist. Darüber hinaus ist die erste Ventileinrichtung, insbesondere wenn die erste Betätigungseinrichtung mit dem ersten Hauptzylinder betätigt wird, mit der ersten Betätigungseinrichtung betreibbar oder derart betreibbar, bevorzugt einstellbar und/oder verstellbar, besonders bevorzugt betätigbar oder derart betätigbar, dass die erste Ventileinrichtung in die erste Konfiguration bewegbar ist oder bewegt wird.

Mit anderen Worten, die erste Ventileinrichtung ist betreibbar, um in einer ersten Konfiguration eine Strömungsverbindung zwischen der Pumpe und dem ersten Radzylinder herzustellen und in einer zweiten Konfiguration eine Strömungsverbindung zwischen der Pumpe und dem ersten Radzylinder zu verhindern. Dabei ist die die erste Ventileinrichtung, insbesondere wenn die erste Betätigungseinrichtung mit dem ersten Hauptzylinder betätigt wird, mit der ersten Betätigungseinrichtung betreibbar oder derart betreibbar, bevorzugt einstellbar und/oder verstellbar, besonders bevorzugt betätigbar oder derart betätigbar, dass die erste Ventileinrichtung in die erste Konfiguration, insbesondere von der zweiten Konfiguration in die erste Konfiguration bewegbar ist oder bewegt wird.

Der erste Hauptzylinderanschluss und der erste Betätigungsanschluss können jeweils Einlass und Auslass für das Fluid sein. Ausserdem steht der erste Hauptzylinderanschluss, beispielsweise mittels einer ersten Betätigungsleitung, in Verbindung mit dem ersten Betätigungsanschluss. Der erste Hauptzylinder ist also mit der ersten Betätigungseinrichtung in Strömungsverbindung bzw. der erste Hauptzylinder ist mit der ersten Betätigungseinrichtung strömungsverbunden. Der erste Hauptzylinder kann eine erste Hauptzylinderkammer und einen in der ersten Hauptzylinderkammer angeordneten ersten Hauptzylinderkolben umfassen. Dabei kann der erste Hauptzylinderanschluss ein Einlass und Auslass der ersten Hauptzylinderkammer des ersten Hauptzylinders sein. Der erste Hauptzylinderkolben ist in der ersten Hauptzylinderkammer durch Beaufschlagung mit Druck in eine bezogen auf die erste Hauptzylinderkammer eingefahrene und ausgefahrene Stellung bringbar. Der erste Hauptzylinder, insbesondere der erste Hauptzylinderkolben, kann durch ein betätigbares Bremspedal, das insbesondere in der Kabine eines landwirtschaftlichen Zugfahrzeugs angeordnet sein kann, betätigt werden. Der erste Hauptzylinder kann also durch das von einem Benutzer betätigbare Bremspedal betätigt werden.

Die Fahrzeugbremsanlage weist einen ersten Bremskreis auf. Der erste Radzylinder kann derart ausgestaltet sein, dass eines oder mehrere vordere und/oder hintere Räder, insbesondere angetriebene Räder, mit dem ersten Radzylinder bremsbar ist bzw. gebremst wird. Der erste Bremskreis, insbesondere der erste Radzylinder, kann an das eine oder mehrere hintere Räder und/oder an das eine oder mehrere vorderen Räder gekoppelt sein. Der erste Bremskreis, insbesondere der erste Radzylinder, ist ausgestaltet, als Reaktion auf eine Betätigung des Bremspedals eines oder mehrere vordere und/oder hintere Räder, insbesondere angetriebene Räder, zu bremsen. Als Reaktion auf eine Betätigung des Bremspedals kann der erste Radzylinder eines oder mehrere vordere und/oder hintere Räder bremsen.

Der erste Bremskreis kann physikalisch in einem Hydraulikaggregat bereitgestellt werden. Die Fahrzeugbremsanlage kann das Hydraulikaggregat umfassen. Das Hydraulikaggregat kann so konfiguriert sein, dass es für eine Bremskraftverteilung und/oder Antriebssteuerung als Teil eines allgemeinen elektronischen Stabilitätsprogramms (ESP) des Zugfahrzeugs sorgt, da bereits viele derselben Ausstattungskomponenten von der Fahrzeugbremsanlage bereitgestellt werden können. Die Fahrzeugbremsanlage kann eine Brems-Antiblockierfunktionalität aufweisen, um beim scharfen Bremsen oder Bremsen auf reibungsarmen Oberflächen ein Blockieren der Räder und ein Schleudern zu verhindern. Obwohl das Hydraulikaggregat in Fahrzeugbremsanlagen mit Antiblockier- und sonstigen Funktionen eingesetzt werden kann, ist seine Anwendung nicht auf solche Systeme begrenzt.

Die erste Ventileinrichtung kann ein erstes Bremsventil umfassen, insbesondere ein erstes Bremsventil sein, das nur im ersten Bremskreis oder im ersten und einem zweiten Bremskreis angeordnet sein kann. Die erste Ventileinrichtung, insbesondere das erste Bremsventil, kann standardmäßig die zweite Konfiguration einnehmen. Die erste Ventileinrichtung, insbesondere das erste Bremsventil, und/oder eine zweite Ventileinrichtung, insbesondere ein zweites Bremsventil können beispielsweise als ein betätigbares 4/2 oder 5/2 oder 4/3 oder 5/3 Wegeventil mit vier oder fünf Anschlüsse ausgeführt sein. Die erste Ventileinrichtung, insbesondere das erste Bremsventil, können zumindest die erste und zweite Konfiguration umfassen, wobei die erste Konfiguration eine Durchflussstellung ist und die zweite Konfiguration eine Sperrstellung ist.

Die erste Betätigungseinrichtung kann zur Ausübung einer Schaltkraft S auf die erste Ventileinrichtung ausgebildet sein. Die erste Betätigungseinrichtung kann die erste Ventileinrichtung mit Druck betätigen. Die erste Betätigungseinrichtung kann beispielsweise ein erstes Druckventil, beispielsweise ein Kolben, mit dem ersten Betätigungsanschluss umfassen, wobei, wenn der erste Betätigungsanschluss vom ersten Hauptzylinder mit eine Kraft, insbesondere mit Druck, beaufschlagt wird, das erste Druckventil die erste Ventileinrichtung in die erste Konfiguration bewegt, insbesondere die erste Ventileinrichtung mit dem ersten Druckventil von der zweiten Konfiguration in die erste Konfiguration bewegbar ist oder bewegt wird. Die ersten Betätigungseinrichtung und die erste Ventileinrichtung können derart ausgestaltet und betreibbar sein, dass, insbesondere wenn die erste Betätigungseinrichtung mit dem ersten Hauptzylinder betätigt wird, die erste Betätigungseinrichtung die erste Ventileinrichtung mit der Schaltkraft S betätigt, sodass die erste Ventileinrichtung in die erste Konfiguration bewegbar ist oder bewegt wird. Die erste Betätigungseinrichtung kann auch als ein integraler Bestandteil der ersten Ventileinrichtung, insbesondere des ersten Bremsventils, ausgebildet sein. Die erste Betätigungseinrichtung ist als ein erster Nebenzylinder ausgebildet. Der erste Nebenzylinder umfasst eine erste Nebenzylinderkammer und einen in der ersten Nebenzylinderkammer angeordneten ersten Nebenzylinderkolben. Dabei ist der erste Betätigungsanschluss ein Einlass und Auslass der ersten Nebenzylinderkammer des ersten Nebenzylinders.

Der erste Nebenzylinderkolben kann in der ersten Nebenzylinderkammer durch Beaufschlagung mit Druck in eine bezogen auf die erste Nebenzylinderkammer eingefahrene und ausgefahrene Stellung bringbar sein. Der erste Nebenzylinder, insbesondere der erste Nebenzylinderkolben, kann, wenn der erste Betätigungsanschluss vom ersten Hauptzylinder mit Druck beaufschlagt wird, die erste Ventileinrichtung in die erste Konfiguration bewegen, insbesondere die erste Ventileinrichtung von der zweiten Konfiguration in die erste Konfiguration bewegen.

Die Pumpe kann mittels einer Leitung mit einer Speicherladeeinrichtung, insbesondere einem Speicherladeventil verbunden, insbesondere in Strömungsverbindung oder strömungsverbunden sein. Die Pumpe kann auch als eine erste und zweite Pumpe ausgebildet sein. Der erste Bremskreises kann, beispielsweise mittels einer ersten Bremsleitung, die Speicherladeeinrichtung mit der ersten Ventileinrichtung, insbesondere dem ersten Bremsventil verbinden. Darüber hinaus kann der erste Bremskreis, insbesondere mittels einer weiteren ersten Bremsleitung, die erste Ventileinrichtung mit dem ersten Radzylinder verbinden. Zwischen der Speicherladeeinrichtung und der ersten Ventileinrichtung kann an oder in der ersten Bremsleitung ein erster Speicher, bevorzugt ein erster Behälter, besonders bevorzugt ein erster Druckspeicher angeordnet sein. Der erste Druckspeicher kann eine Blase umfassen. Der erste Speicher oder erste Behälter können mit der ersten Bremsleitung in Strömungsverbindung bzw. strömungsverbunden und/oder der Speicherladeeinrichtung in Strömungsrichtung nachgeordnet sein. Die Pumpe kann ausserdem mit einem Fluidbehälter in Strömungsverbindung bzw. strömungsverbunden und/oder dem Fluidbehälter in Strömungsrichtung nachgeordnet sein. Die Pumpe kann eine Druckquelle, insbesondere eine Hydraulikpumpe sein. Der erste Bremskreis kann also von der Pumpe bis zum erste Radzylinder ausgebildet sein. Im Weiteren kann der erste Bremskreis die erste Bremsleitung, die weitere erste Bremsleitung, die erste Ventileinrichtung, den ersten Radzylinder und die erste Betätigungseinrichtung umfassen.

Wesentlich für die Erfindung ist, dass die erste Ventileinrichtung, insbesondere wenn die erste Betätigungseinrichtung mit dem ersten Hauptzylinder betätigt wird, mit der ersten Betätigungseinrichtung betreibbar ist, dass die erste Ventileinrichtung in die erste Konfiguration bewegbar ist oder bewegt wird. Dadurch kann eine Fahrzeugbremsanlage mit einem geschlossenen Haupt-Neben-System, hier erster Hauptzylinder und erste Betätigungseinrichtung, insbesondere und/oder ein zweiter Hauptzylinder und/oder mit einer zweiten Betätigungseinrichtung, realisiert werden, wobei der erste und/oder zweite Hauptzylinder vorteilhafterweise wesentlich kleiner ausgeführt und insbesondere direkt mit dem Bremspedal verbunden sein können. Weiterer Vorteil ist, dass die Fahrzeugbremsanlage, insbesondere das Fluid, keine Einschränkungen im Modulationsverhalten und der Ansprechzeit bei niedriger Umgebungstemperatur aufweist. Die Erfindung ermöglicht somit vorteilhafterweise eine hochdynamische und/oder temperaturunabhängige und/oder wartungsfreie Fahrzeugbremsanlage, insbesondere mit minimalem Einbauraum um das Bremspedal und/oder reduziertem Leitungsführungsaufwand zur Kabine (geringere Anzahl von Leitungen und kleinerer Querschnitt) und/oder Geräuschreduzierung. Darüber hinaus kann die Fahrzeugbremsanlage unabhängig vom Lenkungsrücklauf betrieben werden und ist insbesondere nicht mit dem Lenkungsrücklaufs verbunden. Im Weiteren kann mittels der Fahrzeugbremsanlage vorteilhafterweise ein kleiner kontinuierlicher Fluidstrom und/oder Fluiddruck, bevorzugt der Hydraulikflüssigkeit, besonders bevorzugt des Hydrauliköls, realisiert werden, wodurch auf eine Überwachung des Fluids verzichtet werden kann.

In Ausgestaltung der Erfindung umfasst die Fahrzeugbremsanlage einen zweiten Bremskreis, insbesondere einen zweite hydraulischen Bremskreis, der zwischen der Pumpe und einem zweiten Radzylinder, insbesondere einem zweiten hydraulischen Radzylinder vorgesehen ist, insbesondere angeordnet ist. Die Pumpe ist im zweiten Bremskreis betreibbar, insbesondere betreibbar und angeordnet, um Druck zu erzeugen und das Fluid innerhalb des zweiten Bremskreises zu bewegen. Der zweite Radzylinder kann derart ausgestaltet sein, dass eines oder mehrere vordere und/oder hintere Räder, insbesondere angetriebene Räder, mit dem zweiten Radzylinder bremsbar ist bzw. gebremst wird. Der zweite Bremskreis, insbesondere der zweite Radzylinder, kann an das eine oder mehrere hintere Räder und/oder an das eine oder mehrere vorderen Räder gekoppelt sein. Der zweite Bremskreis, insbesondere der zweite Radzylinder, ist ausgestaltet, als Reaktion auf eine Betätigung des Bremspedals eines oder mehrere vordere und/oder hintere Räder, insbesondere angetriebene Räder, zu bremsen. Als Reaktion auf eine Betätigung des Bremspedals kann der zweite Radzylinder eines oder mehrere vordere und/oder hintere Räder bremsen. Im Speziellen kann der erste Bremskreis, insbesondere der erste Radzylinder, an die hinteren Räder und der zweite Bremskreis, insbesondere der zweite Radzylinder, an die vorderen Räder gekoppelt sein. Ebenso kann aber auch der erste Bremskreis an eines oder mehrere hintere oder vordere Räder und der zweite Bremskreis an eines oder mehrere weitere hintere oder weitere vordere Räder gekoppelt sein. Der erste und zweite Bremskreise können insbesondere in Kreise für jeweils eines oder mehrere hintere Räder und/oder jeweils eines oder mehrere vordere Räder unterteilt sein. Der erste und/oder zweite Bremskreis können physikalisch im Hydraulikaggregat bereitgestellt werden. Der zweite Bremskreis, insbesondere der zweite Radzylinder, kann ausgestaltet sein, als Reaktion auf eine Betätigung des Bremspedals ein vorderes und/oder hinteres Rad, insbesondere ein vorderes und/oder hinteres angetriebenes Rad, zu bremsen. Als Reaktion auf eine Betätigung des Bremspedals kann der zweite Radzylinder also das vordere und/oder hintere Rad bremsen. Falls die Pumpe als eine erste und zweite Pumpe ausgebildet ist, kann der erste Bremskreis zwischen der ersten Pumpe und dem ersten Radzylinder ausgebildet sein, insbesondere angeordnet sein, und der zweite Bremskreis kann zwischen der zweiten Pumpe und dem zweiten Radzylinder ausgebildet sein, insbesondere angeordnet sein. Die erste Pumpe kann somit im ersten Bremskreis betreibbar sein, um Druck zu erzeugen und Fluid, insbesondere Hydraulikflüssigkeit, innerhalb des ersten Bremskreises zu bewegen, und die zweite Pumpe im zweiten Bremskreis betreibbar sein, um Druck zu erzeugen und Fluid innerhalb des zweiten Bremskreises zu bewegen. Vorteilhafterweise ermöglichen ein erster und zweiter Bremskreis eine unterschiedliche Abbremsung und/oder eine redundante Fahrzeugbremsanlage.

In Ausgestaltung der Erfindung ist im ersten und zweiten Bremskreis die erste Ventileinrichtung, insbesondere das erste Bremsventil, vorgesehen, insbesondere angeordnet. Die erste Ventileinrichtung ist zwischen einer ersten Konfiguration, in der eine Strömungsverbindung zwischen der Pumpe und dem ersten und zweiten Radzylinder hergestellt ist, insbesondere mittels der ersten Ventileinrichtung hergestellt ist, und einer zweiten Konfiguration beweglich, in der eine Strömungsverbindung zwischen der Pumpe und dem ersten und zweiten Radzylinder verhindert ist, insbesondere mittels der ersten Ventileinrichtung verhindert ist. Die erste Ventileinrichtung ist, insbesondere wenn die erste Betätigungseinrichtung mit dem ersten Hauptzylinder betätigt wird, mit der ersten Betätigungseinrichtung betreibbar oder derart betreibbar, bevorzugt einstellbar und/oder verstellbar, besonders bevorzugt betätigbar oder derart betätigbar, dass die erste Ventileinrichtung in die erste Konfiguration bewegbar ist oder bewegt wird. Die erste Ventileinrichtung kann aber auch nur im ersten Bremskreis angeordnet sein. Vorteilhafterweise können somit der erste und zweite Bremskreis auf einfache Art und Weise nur mit der ersten Ventileinrichtung betrieben werden.

In Ausgestaltung der Erfindung ist im zweiten Bremskreis eine zweite Ventileinrichtung vorgesehen, insbesondere angeordnet. Die zweite Ventileinrichtung kann dabei insbesondere zwischen der Pumpe und dem zweiten Radzylinder und der Pumpe angeordnet sein. Die im zweiten Bremskreis angeordnete zweite Ventileinrichtung ist zwischen einer dritten Konfiguration, in der eine Strömungsverbindung zwischen der Pumpe und dem zweiten Radzylinder hergestellt ist, insbesondere mittels der zweiten Ventileinrichtung hergestellt ist, und einer vierten Konfiguration beweglich, in der eine Strömungsverbindung zwischen der Pumpe und dem zweiten Radzylinder verhindert ist, insbesondere mittels der zweiten Ventileinrichtung verhindert ist. Die zweite Ventileinrichtung kann ein zweites Bremsventil umfassen, insbesondere ein zweites Bremsventil sein, das im zweiten Bremskreis angeordnet sein kann. Die zweite Ventileinrichtung, insbesondere das zweite Bremsventil, kann standardmäßig die vierte Konfiguration einnehmen. Die zweite Ventileinrichtung, insbesondere das zweite Bremsventil, können beispielsweise als ein betätigbares 4/2 oder 5/2 oder 4/3 oder 5/3 Wegeventil mit vier oder fünf Anschlüsse ausgeführt sein. Die zweite Ventileinrichtung, insbesondere das zweite Bremsventil, können zumindest die dritte und vierte Konfiguration (Schaltstellung) umfassen, wobei die dritte Konfiguration eine Durchflussstellung ist und die vierte Konfiguration eine Sperrstellung ist. Die zweite Ventileinrichtung kann genau wie die erste Ventileinrichtung ausgestaltet ein, insbesondere können die erste und zweite Ventileinrichtung identisch sein. Der zweite Bremskreis kann, beispielsweise mittels einer zweiten Bremsleitung, die Speicherladeeinrichtung mit der zweiten Ventileinrichtung, insbesondere dem zweiten Bremsventil verbinden. Darüber hinaus kann der zweite Bremskreis, insbesondere mittels einer weiteren zweiten Bremsleitung, die zweite Ventileinrichtung mit dem zweiten Radzylinder verbinden. Zwischen der Speicherladeeinrichtung und der zweiten Ventileinrichtung kann an oder in der zweiten Bremsleitung ein zweiter Speicher, bevorzugt ein zweiter Behälter, besonders bevorzugt ein zweiter Druckspeicher angeordnet sein. Der zweite Druckspeicher kann eine Blase umfassen. Der zweite Speicher oder zweite Behälter können mit der zweiten Bremsleitung in Strömungsverbindung bzw. strömungsverbunden und/oder der Speicherladeeinrichtung in Strömungsrichtung nachgeordnet sein. Im Weiteren kann der zweite Bremskreis die zweite Bremsleitung, die weitere zweite Bremsleitung, die zweite Ventileinrichtung, den zweiten Radzylinder und die zweite Betätigungseinrichtung umfassen. Vorteilhafterweise können dadurch ein erster und zweiter Bremskreis konstruktiv auf einfache Art und Weise ausgebildet werden. Darüber hinaus kann die Fahrzeugbremsanlage redundant betrieben werden.

In Ausgestaltung der Erfindung ist die erste und zweite Ventileinrichtung, insbesondere wenn die erste Betätigungseinrichtung mit dem ersten Hauptzylinder betätigt wird, mit der ersten Betätigungseinrichtung betreibbar oder derart betreibbar, bevorzugt einstellbar und/oder verstellbar, besonders bevorzugt betätigbar oder derart betätigbar, dass die erste Ventileinrichtung in die erste Konfiguration und die zweite Ventileinrichtung in die dritte Konfiguration bewegbar ist oder bewegt wird, insbesondere von der vierten Konfiguration in die dritte Konfiguration bewegbar ist oder bewegt wird. Dabei kann beispielsweise die erste Betätigungseinrichtung zur Ausübung einer Schaltkraft S auf die erste und zweite Ventileinrichtung ausgebildet sein. Die ersten Betätigungseinrichtung und die erste und zweite Ventileinrichtung können dabei derart ausgestaltet und betreibbar sein, dass, insbesondere wenn die erste Betätigungseinrichtung mit dem ersten Hauptzylinder betätigt wird, die erste Betätigungseinrichtung die erste und zweite Ventileinrichtung mit der Schaltkraft S betätigt, sodass die erste Ventileinrichtung in die erste Konfiguration und die zweite Ventileinrichtung in die dritte Konfiguration bewegbar sind oder bewegt werden. Die erste Betätigungseinrichtung kann auch als ein integraler Bestandteil der ersten und zweiten Ventileinrichtung, insbesondere des ersten und zweiten Bremsventils, ausgebildet sein. Die erste Betätigungseinrichtung kann die erste und zweite Ventileinrichtung mit Druck betätigen. Wenn der erste Betätigungsanschluss vom ersten Hauptzylinder mit Druck beaufschlagt wird, bewegt das erste Druckventil die erste Ventileinrichtung in die erste Konfiguration und die zweite Ventileinrichtung in die dritte Konfiguration. Im Speziellen kann der erste Nebenzylinder, insbesondere der erste Nebenzylinderkolben, wenn der erste Betätigungsanschluss vom ersten Hauptzylinder mit Druck beaufschlagt wird, die erste Ventileinrichtung in die erste Konfiguration und die zweite Ventileinrichtung in die dritte Konfiguration bewegen. Vorteilhafterweise können dadurch ein erster und zweiter Bremskreis auf einfache Art und Weise betrieben werden. Ausserdem kann dadurch die Fahrzeugbremsanlage konstruktiv einfacher ausgestaltet werden und benötigt weniger Einbauraum im Zugfahrzeug, insbesondere der Kabine. Darüber hinaus werden Störgeräusche reduziert oder vermieden.

In Ausgestaltung der Erfindung umfasst die Fahrzeugbremsanlage eine zweite Betätigungseinrichtung mit einem zweiten Betätigungsanschluss, wobei der erste Hauptzylinderanschluss in Strömungsverbindung mit dem zweiten Betätigungsanschluss ist, insbesondere also strömungsverbunden ist. Die zweite Betätigungseinrichtung ist mit dem ersten Hauptzylinder betreibbar, bevorzugt einstellbar und/oder verstellbar, besonders bevorzugt betätigbar. Die erste Ventileinrichtung ist mit der ersten Betätigungseinrichtung betreibbar und die zweite Ventileinrichtung ist mit der zweiten Betätigungseinrichtung betreibbar oder derart betreibbar, bevorzugt einstellbar und/oder verstellbar, besonders bevorzugt betätigbar oder derart betätigbar, insbesondere wenn die erste und zweite Betätigungseinrichtung mit dem ersten Hauptzylinder betätigt werden, dass die erste Ventileinrichtung in die erste Konfiguration und die zweite Ventileinrichtung in die dritte Konfiguration bewegbar sind oder bewegt werden. Die zweite Betätigungseinrichtung kann zur Ausübung einer Schaltkraft S auf die zweite Ventileinrichtung ausgebildet sein. Die zweite Betätigungseinrichtung kann die zweite Ventileinrichtung mit Druck betätigen. Die zweite Betätigungseinrichtung kann beispielsweise ein zweites Druckventil, beispielsweise ein Kolben, mit dem zweiten Betätigungsanschluss umfassen, wobei, wenn der zweite Betätigungsanschluss vom ersten Hauptzylinder mit Druck beaufschlagt wird, das zweite Druckventil die zweite Ventileinrichtung in die dritte Konfiguration bewegt, insbesondere die zweite Ventileinrichtung mit dem zweiten Druckventil von der vierten Konfiguration in die dritte Konfiguration bewegbar ist oder bewegt wird. Die zweiten Betätigungseinrichtung und die zweite Ventileinrichtung können dabei derart ausgestaltet und betreibbar sein, dass, insbesondere wenn die zweite Betätigungseinrichtung mit dem ersten Hauptzylinder betätigt wird, die zweite Betätigungseinrichtung die zweite Ventileinrichtung mit der Schaltkraft S betätigt, sodass die zweite Ventileinrichtung in die dritte Konfiguration bewegbar ist oder bewegt wird. Die zweite Betätigungseinrichtung kann auch als ein integraler Bestandteil der zweiten Ventileinrichtung, insbesondere des zweiten Bremsventils, ausgebildet sein. Die zweite Betätigungseinrichtung kann aber auch als ein Vorsteuerventil (z. B. einem elektromagnetisch gesteuerten, im Ruhezustand offenen Zweistellungsventil), oder ein zweiter Nebenzylinder ausgebildet sein. Der zweite Nebenzylinder kann eine zweite Nebenzylinderkammer und einen in der zweiten Nebenzylinderkammer angeordneten zweiten Nebenzylinderkolben umfassen. Dabei kann der zweite Betätigungsanschluss ein Einlass und Auslass der zweiten Nebenzylinderkammer des zweiten Nebenzylinders sein. Der zweite Nebenzylinderkolben kann in der zweiten Nebenzylinderkammer durch Beaufschlagung mit Druck in eine bezogen auf die zweite Nebenzylinderkammer eingefahrene und ausgefahrene Stellung bringbar sein. Der zweite Nebenzylinder, insbesondere der zweite Nebenzylinderkolben, kann, wenn der zweite Betätigungsanschluss vom ersten Hauptzylinder mit Druck beaufschlagt wird, die zweite Ventileinrichtung in die dritte Konfiguration bewegen, insbesondere die zweite Ventileinrichtung von der vierten Konfiguration in die dritte Konfiguration bewegen. Der erste Hauptzylinder kann aber auch einen weiteren ersten Hauptzylinderanschluss aufweisen. Der weitere erste Hauptzylinderanschluss und der zweite Betätigungsanschluss können jeweils Einlass und Auslass für das strömende Fluid sein. Der weitere erste Hauptzylinderanschluss kann also, anstatt des ersten Hauptzylinderanschlusses, mittels der zweiten Betätigungsleitung mit dem zweiten Betätigungsanschluss verbunden sein. Der erste Hauptzylinder kann also mit der zweiten Betätigungseinrichtung in Strömungsverbindung stehen bzw. der erste Hauptzylinder mit der zweiten Betätigungseinrichtung strömungsverbunden sein. In diesem Ausführungsbeispiel kann der erste Hauptzylinderanschluss mit dem ersten Betätigungsanschluss und der weitere erste Hauptzylinderanschluss mit dem zweiten Betätigungsanschluss verbunden sein. Vorteilhafterweise können dadurch der erste und zweite Bremskreis auf einfache Art und Weise redundant betrieben werden. Ausserdem kann dadurch die Fahrzeugbremsanlage konstruktiv einfacher ausgestaltet werden.

In Ausgestaltung der Erfindung umfasst die Fahrzeugbremsanlage einen zweiten Hauptzylinder mit einem zweiten Hauptzylinderanschluss und die zweite Betätigungseinrichtung mit einem zweiten Betätigungsanschluss, wobei der zweite Hauptzylinderanschluss in Strömungsverbindung mit dem zweiten Betätigungsanschluss ist und die zweite Betätigungseinrichtung mit dem zweiten Hauptzylinder betreibbar ist, bevorzugt einstellbar und/oder verstellbar, besonders bevorzugt betätigbar ist. Die erste Ventileinrichtung ist, insbesondere wenn die erste Betätigungseinrichtung mit dem ersten Hauptzylinder betätigt wird, mit der ersten Betätigungseinrichtung betreibbar oder derart betreibbar, bevorzugt einstellbar und/oder verstellbar, besonders bevorzugt betätigbar oder derart betätigbar, dass die erste Ventileinrichtung, insbesondere mittels der ersten Betätigungseinrichtung, in die erste Konfiguration bewegbar ist oder bewegt wird, und/oder die zweite Ventileinrichtung ist, insbesondere wenn der zweite Betätigungseinrichtung mit dem zweiten Hauptzylinder betätigt wird, mit der zweiten Betätigungseinrichtung betreibbar oder derart betreibbar, bevorzugt einstellbar und/oder verstellbar, besonders bevorzugt betätigbar oder derart betätigbar, dass die zweite Ventileinrichtung, insbesondere mittels der zweiten Betätigungseinrichtung, in die dritte Konfiguration bewegbar ist oder bewegt wird. Mit anderen Worten, die zweite Ventileinrichtung ist, insbesondere wenn die zweite Betätigungseinrichtung mit dem zweiten Hauptzylinder betätigt wird, mit der zweiten Betätigungseinrichtung betreibbar, dass die zweite Ventileinrichtung in die dritte Konfiguration, insbesondere von der vierten Konfiguration in die dritte Konfiguration bewegbar ist oder bewegt wird. Im Speziellen können die zweite Betätigungseinrichtung und die zweite Ventileinrichtung dabei derart ausgestaltet und betreibbar sein, dass die zweite Betätigungseinrichtung die zweite Ventileinrichtung mit der Schaltkraft S betätigt, sodass die zweite Ventileinrichtung in die dritte Konfiguration bewegbar ist oder bewegt wird. Der zweite Hauptzylinderanschluss kann jeweils Einlass und Auslass für das Fluid sein. Der zweite Hauptzylinder kann also mit der zweiten Betätigungseinrichtung in Strömungsverbindung stehen bzw. der zweite Hauptzylinder mit der zweiten Betätigungseinrichtung strömungsverbunden sein, beispielsweise mittels einer zweiten Betätigungsleitung. Die zweite Betätigungseinrichtung, insbesondere das zweite Druckventil, kann, wenn der zweite Betätigungsanschluss vom zweiten Hauptzylinder mit einer Kraft, insbesondere Druck beaufschlagt wird, die zweite Ventileinrichtung in die dritte Konfiguration bewegen. Falls die zweite Betätigungseinrichtung als zweiter Nebenzylinder ausgebildet ist, kann der zweite Nebenzylinder, insbesondere der zweite Nebenzylinderkolben, wenn der zweite Betätigungsanschluss vom zweiten Hauptzylinder mit Druck beaufschlagt wird, die zweite Ventileinrichtung in die dritte Konfiguration bewegen. Der zweite Hauptzylinder kann eine zweite Hauptzylinderkammer und einen in der zweiten Hauptzylinderkammer angeordneten zweiten Hauptzylinderkolben umfassen. Dabei kann der zweite Hauptzylinderanschluss ein Einlass und Auslass der zweiten Hauptzylinderkammer sein. Der zweite Hauptzylinderkolben kann in der zweiten Hauptzylinderkammer durch Beaufschlagung mit Druck in eine bezogen auf die zweite Hauptzylinderkammer eingefahrene und ausgefahrene Stellung bringbar sein. Der erste und zweite Hauptzylinder, insbesondere der erste und zweite Hauptzylinderkolben, können durch das Bremspedal betätigt werden, insbesondere können der erste und zweite Hauptzylinder durch das von einem Benutzer betätigbare Bremspedal betätigt werden. Der erste und zweite Bremskreis, insbesondere der erste und zweite Radzylinder sind also ausgestaltet, als Reaktion auf eine Betätigung des Bremspedals jeweils eines oder mehrere vordere und/oder hintere Räder, insbesondere ein vorderes und/oder hinteres angetriebenes Rad, zu bremsen. Es kann aber auch sein, dass der erste Hauptzylinder mit dem Bremspedal und der zweite Hauptzylinder, insbesondere der zweite Hauptzylinderkolben, mit einem weiteren Bremspedal betätigt wird, insbesondere kann der zweite Hauptzylinder durch das von einem Benutzer betätigbare weitere Bremspedal betätigt werden. Der zweite Bremskreis, insbesondere der zweite Radzylinder, kann also ausgestaltet sein, als Reaktion auf eine Betätigung des weiteren Bremspedals eines oder mehrere vordere und/oder hintere Räder zu bremsen. Dadurch können alle oben genannten Vorteile der erfindungsgemässen Fahrzeugbremsanlage realisiert werden.

In Ausgestaltung der Erfindung weist die erste Betätigungseinrichtung einen ersten Versorgungsanschluss und/oder die zweite Betätigungseinrichtung einen zweiten Versorgungsanschluss auf. Darüber hinaus können der erste und/oder zweite Versorgungsanschluss mittels einer ersten Versorgungsleitung mit der Pumpe strömungsverbunden sein, d.h. entweder ist nur der erste Versorgungsanschluss mittels der ersten Versorgungsleitung mit der Pumpe strömungsverbunden oder der erste und zweite Versorgungsanschluss sind mittels der ersten Versorgungsleitung gleichzeitig mit der Pumpe strömungsverbunden. Ebenso kann aber auch der erste Versorgungsanschluss mittels einer ersten Versorgungsleitung mit der Pumpe, insbesondere der ersten Pumpe, strömungsverbunden sein und/oder der zweite Versorgungsanschluss mittels einer zweiten Versorgungsleitung mit der Pumpe, insbesondere der zweiten Pumpe, strömungsverbunden sein. Der erste Versorgungsanschluss ist Einlass und Auslass für das Fluid. Der zweite Versorgungsanschluss kann Einlass und Auslass für das Fluid sein.

Im Speziellen ist der erste Versorgungsanschluss ein Einlass und Auslass der ersten Nebenzylinderkammer des ersten Nebenzylinders. Der zweite Versorgungsanschluss kann ein Einlass und Auslass der zweiten Nebenzylinderkammer des zweiten Nebenzylinders sein. Die Pumpe kann mittels der ersten und/oder zweiten Versorgungsleitung mit der ersten und/oder zweite Betätigungseinrichtung verbunden sein, also mit der ersten und/oder zweite Betätigungseinrichtung in Strömungsverbindung stehen bzw. strömungsverbunden sein. In der ersten Versorgungsleitung kann ein erstes Überdruckventil und/oder in der zweiten Versorgungsleitung ein zweites Überdruckventil angeordnet sein, das bzw. die sich öffnen, sollte in der jeweiligen Versorgungsleitung ein Druck anstehen, der einen vorgegebenen Höchstdruck übersteigt. Ebenso kann in der ersten und/oder zweiten Versorgungsleitung zwischen dem ersten und/oder dem zweiten Versorgungsanschluss und dem jeweiligen zugeordneten Überdruckventil jeweils ein Rückschlagventil angeordnet sein, insbesondere ein erstes Rückschlagventil in der ersten Versorgungsleitung und/oder ein zweites Rückschlagventil in der zweiten Versorgungsleitung angeordnet sein. Um den Druck in der ersten und/oder zweiten Versorgungsleitung zu senken, kann zwischen der Pumpe und dem jeweiligen Überdruckventil in der ersten Versorgungsleitung eine erste Drossel bzw. ein Drosselventil und/oder in der zweiten Versorgungsleitung eine zweite Drossel bzw. ein Drosselventil angeordnet sein. Vorteilhafterweise kann dadurch ein kleiner kontinuierlicher Fluidstrom und/oder Fluiddruck des Fluids zur ersten und/oder zweiten Betätigungseinrichtung realisiert werden. Darüber hinaus kann von Vorteil die Größe eines Reservoirs erheblich reduziert werden.

In Ausgestaltung der Erfindung umfasst der erste Hauptzylinder einen ersten Reservoiranschluss und/oder der zweite Hauptzylinder einen zweiten Reservoiranschluss, und/oder der erste Hauptzylinder ist mittels des ersten Reservoiranschlusses und/oder der zweite Hauptzylinder ist mittels des zweiten Reservoiranschlusses mit einem Reservoir strömungsverbunden. Der erste und/oder zweite Reservoiranschluss können Einlass und Auslass für das Fluid sein. Das Reservoir kann als Ablauf und zur Versorgung für den ersten Hauptzylinder und/oder den zweiten Hauptzylinder dienen. Der erste Reservoiranschluss kann mit einer ersten Reservoirleitung und/oder der zweite Reservoiranschluss kann mit einer zweiten Reservoirleitung mit dem Reservoir verbunden sein. Der erste und/oder zweite Hauptzylinder kann also mit dem Reservoir in Strömungsverbindung stehen bzw. strömungsverbunden sein. Vorteilhafterweise weist das Reservoir nur die Verbindung zum ersten und/oder zweiten Hauptzylinder auf, ist also ein unabhängiges Reservoir. Darüber hinaus ist das Reservoir unabhängig vom Lenkungsrücklauf und ist insbesondere nicht als Bestandteil des Lenkungsrücklaufs ausgebildet. Vorteilhafterweise kann dadurch ein kleiner kontinuierlicher Fluidstrom und/oder Fluiddruck des Fluids vom ersten und/oder zweiten Betätigungselement zum ersten und/oder zweiten Hauptzylinder realisiert werden, wodurch auf eine Überwachung des Reservoirs und einen Zugang zum Reservoir zum Nachfüllen verzichtet werden kann. Darüber hinaus kann von Vorteil auf ein geschlossenes Reservoir, also eine Anbindung an vorhandene Reservoirs, beispielsweise Lenkung, verzichtet werden und die Größe des Reservoirs kann erheblich reduziert werden.

In Ausgestaltung der Erfindung weisen die erste und/oder die zweite Ventileinrichtung jeweils ein erstes Rückstellelement zur Rückstellung in die zweite und/oder vierte Konfiguration auf. Darüber hinaus weist die erste und -optionaldie zweite Ventileinrichtung jeweils ein zweites Rückstellelement zur Rückstellung in die zweite und/oder vierte Konfiguration auf. Das erste und/oder zweite Rückstellelement an der ersten Ventileinrichtung kann also die erste Ventileinrichtung aus der ersten in die zweite Konfiguration bewegen. Ebenso kann das weitere erste und/oder das weitere zweite Rückstellelement an der zweiten Ventileinrichtung die zweite Ventileinrichtung aus der dritten in die vierte Konfiguration bewegen. Das erste und/oder zweite Rückstellelement können z.B. mechanisch oder elektromechanisch oder elektromagnetisch gesteuert sein. Das erste und/oder zweite Rückstellelement können beispielsweise als Feder oder als eine elektrische Betätigung mit magnetischer Spule ausgebildet sein. Das zweite Rückstellelement ist vorteilhafterweise eine zusätzliche Betätigung zur Kompensation des Stromes und/oder Drucks des Fluids in der ersten und/oder zweiten Ventileinrichtung. Von Vorteil kann mittels des ersten und zweiten Rückstellelements die Rückstellung des ersten und/oder zweiten Ventileinrichtung genauer gesteuert werden. Vorteilhafterweise kann dadurch auch bei leichter Betätigung des Bremspedals und/oder des weiteren Bremspedals der Fluidstrom unterbrochen werden, wobei jede weitere Bewegung Druck aufbaut und die erste und/oder zweite Ventileinrichtung betätigt.

Die Erfindung betrifft weiter ein landwirtschaftliches Zugfahrzeug, umfassend eine Fahrzeugbremsanlage nach einem der Ansprüche 1 bis 13. Das erfindungsgemässe landwirtschaftliche Zugfahrzeug weist die oben beschriebenen Vorteile der erfindungsgemässen Fahrzeugbremsanlage auf. In Ausgestaltung der Erfindung umfasst das landwirtschaftliches Zugfahrzeug eine Kabine und ein Fahrgestell, wobei die Kabine am, insbesondere auf, dem Fahrgestell angeordnet ist. Darüber hinaus sind, insbesondere nur, der erste und/oder zweite Hauptzylinder und das Reservoir, sowie insbesondere die zugehörigen Leitungen, in der Kabine angeordnet. Alle anderen Bestandteile der Fahrzeugbremsanlage können am, insbesondere im, Fahrgestell angeordnet sein.

Die erfindungsgemässe Fahrzeugbremsanlage und/oder das Zugfahrzeug können eine Steuereinheit umfassen. Die Steuereinheit und/oder weitere Steuereinheit (engl. ECU = electronic control unit oder ECM = electronic control module) kann ein elektronisches Modul und/oder ein eingebettetes System sein. Die Steuereinheit kann ein Speichermodul und/oder einen Prozessor umfassen. Die Steuereinheit kann mit dem ersten und/oder zweiten Hauptzylinder, der ersten und/oder zweiten Betätigungseinrichtung, insbesondere Nebenzylinder, der ersten und/oder zweiten Ventileinrichtung, einem oder mehreren Sensoren und/oder dem Speicher und/oder Prozessor und/oder dem Hydraulikaggregat signalverbunden sein, also datenleitend verbunden sein. Die Verbindung kann kabelgebunden oder kabellos, also per Funk, realisiert sein. Der Kommunikationsbus kann beispielsweise Isobus, CAN-Bus oder ähnliches sein kann. Die Steuereinheit kann als Teil der Fahrzeugbremsanlage oder am Zugfahrzeug vorgesehen sein. Im Speziellen können auch zwei Steuereinheiten, eine erste für das Zugfahrzeug und eine zweite für die Fahrzeugbremsanlage vorgesehen sein. Ausserdem können der erste und/oder zweite Hauptzylinder und/oder die erste und/oder zweite Betätigungseinrichtung, insbesondere der Nebenzylinder, und/oder die erste und/oder zweite Ventileinrichtung und/oder der eine oder mehrere Sensoren mittels der Steuereinheit verstellbar und/oder einstellbar sein. Der oder die Sensoren können Eingangsinformationen liefern, in der Regel in Bezug auf relative Raddrehzahlen, sodass die Steuereinheit den Betrieb des Hydraulikaggregats regeln kann.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines erfindungsgemässen landwirtschaftlichen Zugfahrzeugs, und
- Fig. 2: eine schematische Darstellung eines ersten Ausführungsbeispiels der erfindungsgemässen Fahrzeugbremsanlage, und
- Fig. 3: eine schematische Darstellung eines zweiten Ausführungsbeispiels der erfindungsgemässen Fahrzeugbremsanlage, und
- Fig. 4: eine schematische Darstellung eines dritten Ausführungsbeispiels der erfindungsgemässen Fahrzeugbremsanlage, und
- Fig. 5: eine schematische Darstellung eines vierten Ausführungsbeispiels der erfindungsgemässen Fahrzeugbremsanlage, und
- Fig. 6: eine schematische Darstellung eines fünften Ausführungsbeispiels der erfindungsgemässen Fahrzeugbremsanlage, und
- Fig. 7: eine schematische Darstellung eines sechsten Ausführungsbeispiels der erfindungsgemässen Fahrzeugbremsanlage, und
- Fig. 8: eine schematische Darstellung einer Anordnung einer erfindungsgemässen Fahrzeugbremsanlage in einem erfindungsgemässen Zugfahrzeug.
- Fig. 9: eine schematische Darstellung einer Anordnung einer erfindungsgemässen Fahrzeugbremsanlage in einem erfindungsgemässen Zugfahrzeug.

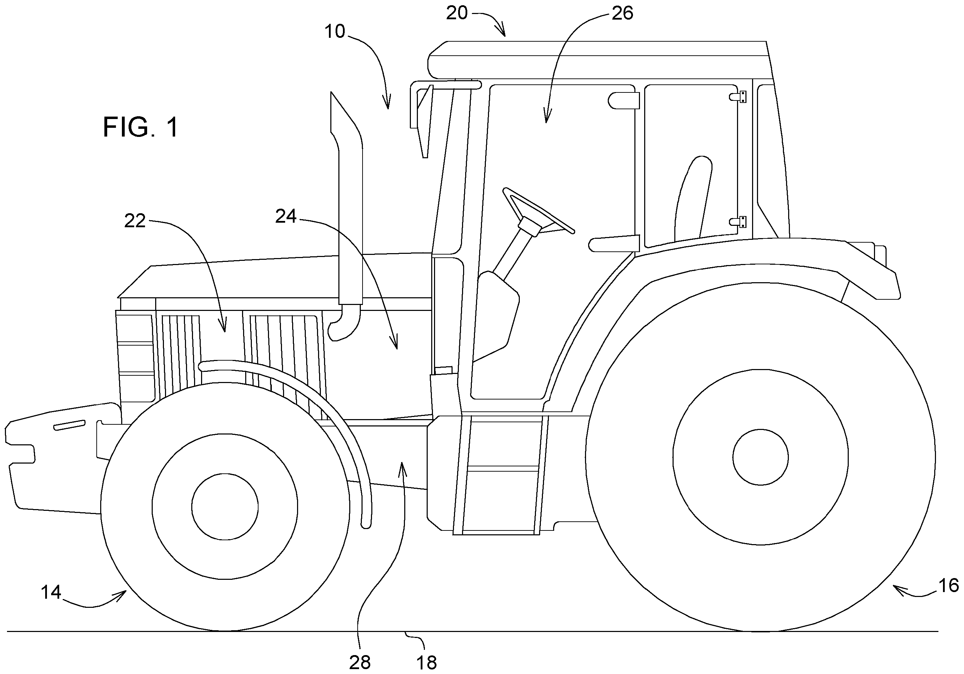

Figur 1 zeigt eine schematische Seitenansicht eines erfindungsgemässen landwirtschaftlichen Zugfahrzeugs 10, insbesondere in Form eines Ackerschleppers oder Traktors. Der grundsätzliche Aufbau eines landwirtschaftlichen Zugfahrzeugs 10 wird als dem Fachmann bekannt angenommen.

Das Zugfahrzeug 10 weist zwei oder mehrere Bodeneingriffsmittel auf, insbesondere in Form von Rädern 14, 16, welche mit einem Untergrund zur Übertragung von Antriebskräften in Eingriff stehen und/oder durch die sich das Zugfahrzeug 10 auf dem Untergrund 18 abstützt. Die Bodeneingriffsmittel können an einer Vorderachse und einer Hinterachse angeordnet oder aufgehängt sein. Im Speziellen sind die Bodeneingriffsmittel vordere Räder 14, die an der Vorderachse angeordnet sein können, und/oder hintere Räder 16, die an der Hinterachse angeordnet sein können. Das Zugfahrzeug 10 kann ausserdem ein Fahrgestell aufweisen, wobei das Fahrgestell insbesondere von den an der Vorderachse und der Hinterachse aufgehängten Bodeneingriffsmitteln getragen wird.

Darüber hinaus weist das Zugfahrzeug 10 einen andeutungsweise gezeigten Antrieb 22 auf, beispielsweise einen Motor, welcher in Form eines Verbrennungsmotors ausgebildet sein kann. Ausserdem kann das Zugfahrzeug 10 eine Getriebeeinrichtung 24, insbesondere ein Getriebe umfassen. Die Bodeneingriffsmittel sind mit dem Antrieb 22, insbesondere mit dem Antrieb 22 der mit der Getriebeeinrichtung 24 zusammenwirkt, antreibbar oder werden angetrieben. Dabei kann insbesondere ein Ausgangsdrehmoment der Getriebeeinrichtung 24 über einen Antriebsstrang auf die Bodeneingriffsmittel übertragen werden. Das Zugfahrzeug 10 verfügt über eine Kabine 20, in der ein Bedienerarbeitsplatz 26 angeordnet ist. Ausserdem umfasst das Zugfahrzeug 10 eine erfindungsgemässe Fahrzeugbremsanlage 28.

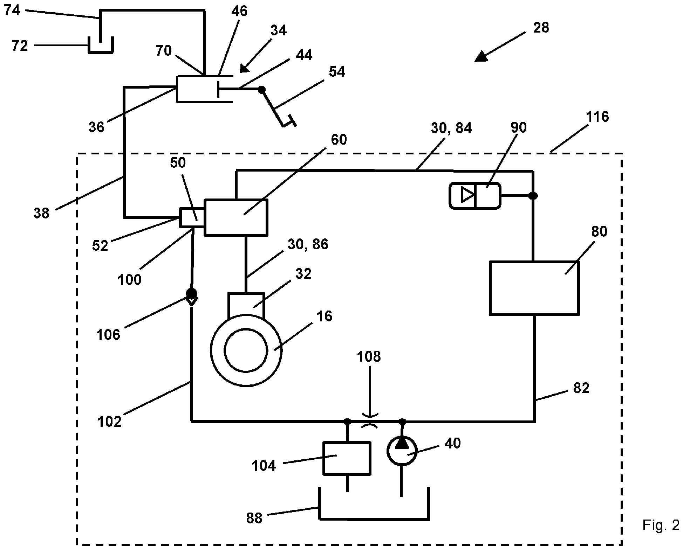

Figur 2 zeigt eine schematische Darstellung eines ersten Ausführungsbeispiels der erfindungsgemässen Fahrzeugbremsanlage 28. Die in Figur 2 gezeigte Fahrzeugbremsanlage 28 ist eine detaillierte schematische Darstellung der in Figur 1 gezeigten Fahrzeugbremsanlage 28. Im Folgenden wird deshalb lediglich auf in Figur 1 nicht gezeigte Details eingegangen. Die Fahrzeugbremsanlage 28 kann, wie in Figur 1 dargestellt, in ein landwirtschaftliches Zugfahrzeug 10 eingebaut sein.

Die Fahrzeugbremsanlage 28 weist einen ersten Bremskreis 30, insbesondere einen ersten hydraulischen Bremskreis auf. Der erste Bremskreis 30 ist zwischen einer Pumpe 40 und einem ersten Radzylinder 32, insbesondere einem ersten hydraulischen Radzylinder, vorgesehen. Die Pumpe 40 ist im ersten Bremskreis 30 betreibbar, um Druck zu erzeugen und ein Fluid, bevorzugt Hydraulikflüssigkeit, besonders bevorzugt Hydrauliköl, innerhalb des ersten Bremskreises 30 zu bewegen. Der erste Radzylinder 32 kann derart ausgestaltet sein, dass eines oder mehrere vordere und/oder hintere Räder 14, 16 mit dem ersten Radzylinder 32 bremsbar ist bzw. gebremst wird. In Figur 2 ist der erste Bremskreis 30, insbesondere mittels des ersten Radzylinders 32, an das eine oder mehrere hintere Räder 16 gekoppelt. Der erste Bremskreis 30, insbesondere der erste Radzylinder 32, kann aber auch nur eines oder mehrere vordere Räder 14 gekoppelt sein.

Wie in Fig. 2 gezeigt, umfasst die Fahrzeugbremsanlage 28, einen ersten Hauptzylinder 34 mit einem ersten Hauptzylinderanschluss 36 und eine erste Betätigungseinrichtung 50 mit einem ersten Betätigungsanschluss 52. Der erste Hauptzylinderanschluss 36 und der erste Betätigungsanschluss 52 sind jeweils Einlass und Auslass für das strömende Fluid. Die Fahrzeugbremsanlage 28 umfasst eine erste Betätigungsleitung 38, die den ersten Hauptzylinderanschluss 36 und den ersten Betätigungsanschluss 52 verbindet. Der erste Hauptzylinder 34 ist also mit der ersten Betätigungseinrichtung 50 in Strömungsverbindung oder strömungsverbunden. Darüber hinaus ist die erste Betätigungseinrichtung 50 mit dem ersten Hauptzylinder 34 betreibbar oder wird mit diesem betrieben, bevorzugt einstellbar und/oder verstellbar, besonders bevorzugt betätigbar. Dabei kann der erste Hauptzylinder 34 eine Kraft auf die erste Betätigungseinrichtung 50 ausüben, beispielsweise indem der erste Hauptzylinder 34 mit einem Bremspedal 54 betätigt wird, insbesondere indem ein Strom und/oder ein Druck des Fluids vom ersten Hauptzylinder 34 zur ersten Betätigungseinrichtung 50 ausgeübt wird.

Im Weiteren ist im ersten Bremskreis 30 eine erste Ventileinrichtung 60 vorgesehen, insbesondere angeordnet. Die erste Ventileinrichtung 60 ist zwischen einer ersten Konfiguration, in der eine Strömungsverbindung zwischen der Pumpe 40 und dem ersten Radzylinder 32 hergestellt ist, insbesondere mittels der ersten Ventileinrichtung 60 hergestellt ist, und einer zweiten Konfiguration beweglich, in der eine Strömungsverbindung zwischen der Pumpe 40 und dem ersten Radzylinder 32 verhindert ist, insbesondere mittels der ersten Ventileinrichtung 60 verhindert ist. Ausserdem ist die die erste Ventileinrichtung 60, insbesondere wenn die erste Betätigungseinrichtung 50 mit dem ersten Hauptzylinder 34 betätigt wird, mit der ersten Betätigungseinrichtung 50 betreibbar oder derart betreibbar, bevorzugt einstellbar und/oder verstellbar, besonders bevorzugt betätigbar oder derart betätigbar, dass die erste Ventileinrichtung 60 in die erste Konfiguration bewegbar ist oder bewegt wird.

Mit anderen Worten, die erste Ventileinrichtung 60 ist betreibbar, bevorzugt derart einstellbar und/oder verstellbar, besonders bevorzugt betätigbar, um in einer ersten Konfiguration eine Strömungsverbindung zwischen der Pumpe 40 und dem ersten Radzylinder 32 herzustellen und in einer zweiten Konfiguration eine Strömungsverbindung zwischen der Pumpe 40 und dem ersten Radzylinder 32 zu verhindern. Dabei ist die die erste Ventileinrichtung 60, insbesondere wenn die erste Betätigungseinrichtung 50 mit dem ersten Hauptzylinder 34 betätigt wird, mit der ersten Betätigungseinrichtung 50 betreibbar oder derart betreibbar, bevorzugt einstellbar und/oder verstellbar, besonders bevorzugt betätigbar oder derart betätigbar, dass die erste Ventileinrichtung 60 in die erste Konfiguration, insbesondere von der zweiten Konfiguration in die erste Konfiguration bewegbar ist oder bewegt wird.

Dabei kann beispielsweise die erste Betätigungseinrichtung 50 zur Ausübung einer Schaltkraft S auf die erste Ventileinrichtung 60 ausgebildet sein. Die ersten Betätigungseinrichtung 50 und die erste Ventileinrichtung 60 können dabei derart ausgestaltet und betreibbar sein, dass, insbesondere wenn die erste Betätigungseinrichtung 50 mit dem ersten Hauptzylinder 34 betätigt wird, die erste Betätigungseinrichtung 50 die erste Ventileinrichtung 60 mit der Schaltkraft S betätigt, sodass die erste Ventileinrichtung 60 in die erste Konfiguration bewegbar ist oder bewegt wird. Die erste Ventileinrichtung 60 kann ein erstes Bremsventil umfassen, insbesondere ein erstes Bremsventil sein, das im ersten Bremskreis 30 angeordnet sein kann.

Der erste Hauptzylinder 34 umfasst eine erste Hauptzylinderkammer 46 und einen in der ersten Hauptzylinderkammer 46 angeordneten ersten Hauptzylinderkolben 44.

Dabei kann der erste Hauptzylinderanschluss 36 ein Einlass und Auslass der ersten Hauptzylinderkammer 46 des ersten Hauptzylinders 34 sein. Der erste Hauptzylinderkolben 44 ist in der ersten Hauptzylinderkammer 46 durch Beaufschlagung mit Druck in eine bezogen auf die erste Hauptzylinderkammer 46 eingefahrene und ausgefahrene Stellung bringbar. Der erste Hauptzylinder 34, insbesondere der erste Hauptzylinderkolben 44, kann durch das Bremspedal 54 betätigt werden, insbesondere kann der erste Hauptzylinder 34 durch das von einem Benutzer betätigbare Bremspedal 54 betätigt werden. Der erste Bremskreis 30, insbesondere der erste Radzylinder 32 ist also ausgestaltet, als Reaktion auf eine Betätigung des Bremspedals 54 ein vorderes und/oder hinteres Rad 14, 16, insbesondere ein vorderes und/oder hinteres angetriebenes Rad, zu bremsen. Als Reaktion auf eine Betätigung des Bremspedals 54 kann der erste Radzylinder 32 das vordere und/oder hintere Rad 14, 16 bremsen.

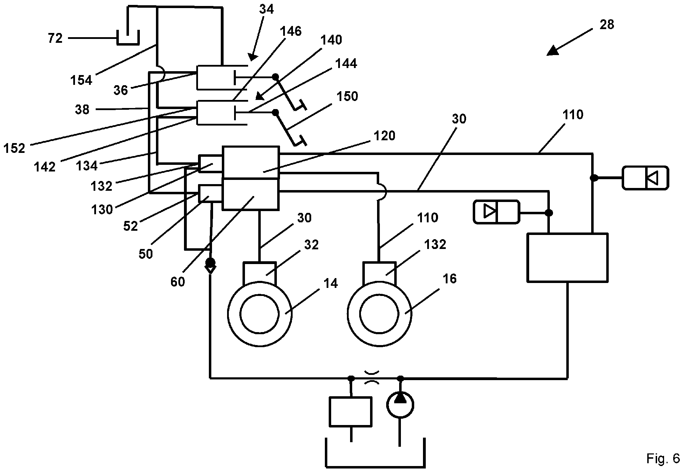

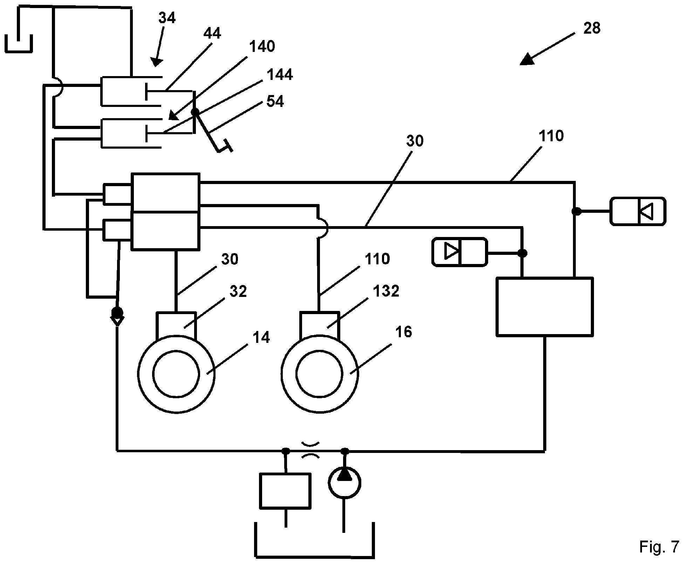

Der erste Hauptzylinder 34 umfasst einen ersten Reservoiranschluss 70. Der erste Reservoiranschluss 70 ist Einlass und Auslass für das Fluid. Ausserdem ist ein Reservoir 72 vorgesehen. Das Reservoir 72 kann als Ablauf und Notversorgung für den ersten Hauptzylinder 34 und/oder einen zweiten Hauptzylinder (siehe Figuren 6 und 7, Bezugszeichen 140) vorgesehen sein. Der erste Reservoiranschluss 70 ist mit einer ersten Reservoirleitung 74 mit dem Reservoir 72 verbunden. Der erste Hauptzylinder 34 ist also mit dem Reservoir 72 in Strömungsverbindung bzw. strömungsverbunden. Das Reservoir 72 weist nur die Verbindung zum ersten und/oder zweiten Hauptzylinder 34, 140 auf, ist also ein unabhängiges Reservoir. Darüber hinaus ist das Reservoir 72 unabhängig vom Lenkungsrücklauf und ist insbesondere nicht als Bestandteil des Lenkungsrücklaufs ausgebildet.

Die Pumpe 40 ist mittels einer Leitung 82 mit einer Speicherladeeinrichtung 80 verbunden. Eine erste Bremsleitung 84 des ersten Bremskreises 30 verbindet die Speicherladeeinrichtung 80 mit der ersten Ventileinrichtung 60, insbesondere dem ersten Bremsventil. Eine weitere erste Bremsleitung 86 des ersten Bremskreises 30 verbindet die erste Ventileinrichtung 60 mit dem ersten Radzylinder 32. Zwischen der Speicherladeeinrichtung 80 und der ersten Ventileinrichtung 60 ist an oder in der ersten Bremsleitung 84 ein erster Speicher 90 angeordnet. Der erste Speicher 90 ist mit der ersten Bremsleitung 84 in Strömungsverbindung bzw. strömungsverbunden und/oder der Speicherladeeinrichtung 80 in Strömungsrichtung nachgeordnet. Die Pumpe 40 ist ausserdem mit einem Fluidbehälter 88 in Strömungsverbindung bzw. strömungsverbunden und/oder ist dem Fluidbehälter 88 in Strömungsrichtung nachgeordnet.

Die erste Betätigungseinrichtung 50 kann die erste Ventileinrichtung 60 mit Druck betätigen. Die erste Betätigungseinrichtung 50 ist als ein erster Nebenzylinder ausgebildet.

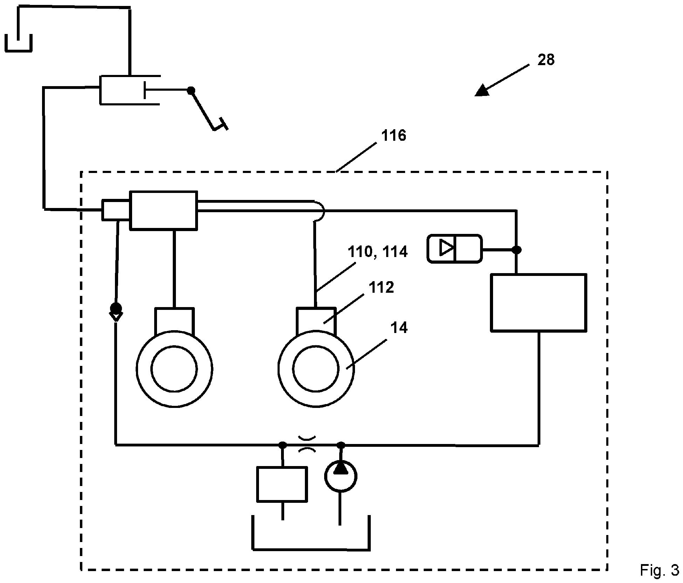

Die erste Betätigungseinrichtung 50 umfasst ausserdem einen ersten Versorgungsanschluss 100. Der erste Versorgungsanschluss 100 ist Einlass und Auslass für das Fluid. Die Pumpe 40 ist mittels einer ersten Versorgungsleitung 102 mit der ersten Betätigungseinrichtung 50 verbunden. Die Pumpe 40 ist also mit der ersten Betätigungseinrichtung 50 in Strömungsverbindung bzw. strömungsverbunden. In der ersten Versorgungsleitung 102 kann, wie in Figur 2 gezeigt, ein Überdruckventil 104 angeordnet sein, das sich öffnet, sollte in der ersten Versorgungsleitung 102 ein Druck anstehen, der einen vorgegebenen Höchstdruck übersteigt. Ebenso kann in der ersten Versorgungsleitung 102 zwischen dem ersten Versorgungsanschluss 100 und dem Überdruckventil 104 ein Rückschlagventil 106 angeordnet sein. Um den Druck in der ersten Versorgungsleitung 102 zu senken, kann zwischen der Pumpe 40 und dem Überdruckventil 104 eine Drossel 108, insbesondere ein Drosselventil angeordnet sein. Figur 3 zeigt eine schematische Darstellung eines zweiten Ausführungsbeispiels der erfindungsgemässen Fahrzeugbremsanlage 28. Die in Figur 3 gezeigte Fahrzeugbremsanlage entspricht im Wesentlichen der in den Figuren 1 und 2 gezeigten Fahrzeugbremsanlage, sodass im Folgenden lediglich auf Details und/oder Unterschiede eingegangen wird.

Die Fahrzeugbremsanlage 28 umfasst einen zweiten Bremskreis 110. Der zweite Bremskreis 110 ist zwischen der Pumpe 40 und einem zweiten Radzylinder 112 vorgesehen, insbesondere angeordnet oder ausgebildet. Die Pumpe 40 ist im zweiten Bremskreis 110 betreibbar, um Druck zu erzeugen und das Fluid innerhalb des zweiten Bremskreises 110 zu bewegen.

In Figur 3 ist der zweite Bremskreis 110, insbesondere mittels des zweiten Radzylinders 112, an ein einzelnes oder mehrere vordere Räder 14 gekoppelt. Der zweite Bremskreis 110 kann aber auch nur an ein einzelnes oder mehrere hintere Räder 16 gekoppelt sein. Im Speziellen kann der erste Bremskreis 30 an die hinteren Räder 16 und der zweite Bremskreis 110 an die vorderen Räder 14 gekoppelt sein. Ebenso kann der erste Bremskreis 30 aber auch an ein hinteres oder vorderes Rad 14, 16 und der zweite Bremskreis 110 an ein anderes hinteres oder vorderes Rad 14, 16 gekoppelt sein. Eine weitere zweite Bremsleitung 114 des zweiten Bremskreises 110 verbindet die erste Ventileinrichtung 60 mit dem zweiten Radzylinder 112. Der erste und/oder zweite Bremskreis 30, 110 können physikalisch in einem Hydraulikaggregat 116 bereitgestellt werden.

Die erste Ventileinrichtung 60, insbesondere das erste Bremsventil, ist im ersten und zweiten Bremskreis 30, 110 vorgesehen, insbesondere angeordnet. Die erste Ventileinrichtung 60 ist zwischen einer ersten Konfiguration, in der eine Strömungsverbindung zwischen der Pumpe 40 und dem ersten und zweiten Radzylinder 32, 112 hergestellt ist, insbesondere mittels der ersten Ventileinrichtung 60 hergestellt ist, und einer zweiten Konfiguration beweglich, in der eine Strömungsverbindung zwischen der Pumpe 40 und dem ersten und zweiten Radzylinder 32, 112 verhindert ist, insbesondere mittels der ersten Ventileinrichtung 60 verhindert ist.

Die erste Ventileinrichtung 60 ist, insbesondere wenn die erste Betätigungseinrichtung 50 mit dem ersten Hauptzylinder 34 betätigt wird, mit der ersten Betätigungseinrichtung 50 betreibbar oder derart betreibbar, bevorzugt einstellbar und/oder verstellbar, besonders bevorzugt betätigbar oder derart betätigbar, dass die erste Ventileinrichtung 60 in die erste Konfiguration bewegbar ist oder bewegt wird. Der zweite Bremskreis 110, insbesondere der zweite Radzylinder 112 ist ausgestaltet, als Reaktion auf eine Betätigung des Bremspedals 54 ein vorderes und/oder hinteres Rad 14,16 zu bremsen, insbesondere ein vorderes und/oder hinteres angetriebenes Rad 14,16. Als Reaktion auf eine Betätigung des Bremspedals 54 kann der zweite Radzylinder 112 also das vordere und/oder hintere Rad 14, 16 bremsen.

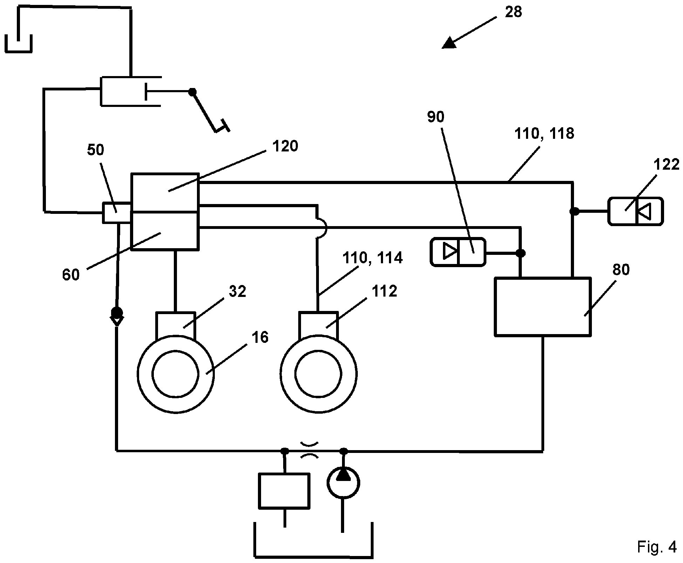

Figur 4 zeigt eine schematische Darstellung eines dritten Ausführungsbeispiels der erfindungsgemässen Fahrzeugbremsanlage 28. Die in Figur 4 gezeigte Fahrzeugbremsanlage 28 entspricht im Wesentlichen der in den Figuren 1 bis 3 gezeigten Fahrzeugbremsanlage 28, sodass im Folgenden lediglich auf Details und/oder Unterschiede eingegangen wird.

Die Fahrzeugbremsanlage 28 umfasst gemäss Figur 4 eine zweite Ventileinrichtung 120. Die zweite Ventileinrichtung 120 kann dabei insbesondere wie dargestellt zwischen der Pumpe 40 und dem zweiten Radzylinder 112 angeordnet sein. Die zweite Ventileinrichtung 120 ist im zweiten Bremskreis 110 vorgesehen, insbesondere angeordnet. Die zweite Ventileinrichtung 120 ist zwischen einer dritten Konfiguration, in der eine Strömungsverbindung zwischen der Pumpe 40, oder insbesondere der zweiten Pumpe, und dem zweiten Radzylinder 112 hergestellt ist, insbesondere mittels der zweiten Ventileinrichtung 120 hergestellt ist, und einer vierten Konfiguration beweglich ist, in der eine Strömungsverbindung zwischen der Pumpe 40 und dem zweiten Radzylinder 112 verhindert ist, insbesondere mittels der zweiten Ventileinrichtung 120 verhindert ist. Die erste und zweite Ventileinrichtung 60, 120, insbesondere wenn die erste Betätigungseinrichtung 50 mit dem ersten Hauptzylinder 34 betätigt wird, sind mit der ersten Betätigungseinrichtung 50 betreibbar oder derart betreibbar, bevorzugt einstellbar und/oder verstellbar, besonders bevorzugt betätigbar oder derart betätigbar, dass die erste Ventileinrichtung 60 in die erste Konfiguration und die zweite Ventileinrichtung 120 in die dritte Konfiguration bewegbar ist oder bewegt wird, insbesondere von der vierten Konfiguration in die dritte Konfiguration bewegbar ist oder bewegt wird.

Dabei kann beispielsweise die erste Betätigungseinrichtung 50 zur Ausübung einer Schaltkraft S auf die erste und zweite Ventileinrichtung 60, 120 ausgebildet sein. Die ersten Betätigungseinrichtung 50 und die erste und zweite Ventileinrichtung 60, 120 können dabei derart ausgestaltet und betreibbar sein, dass, insbesondere wenn die erste Betätigungseinrichtung 50 mit dem ersten Hauptzylinder 34 betätigt wird, die erste Betätigungseinrichtung 50 die erste und zweite Ventileinrichtung 60, 120 mit der Schaltkraft S betätigt, sodass die erste Ventileinrichtung 60 in die erste Konfiguration und die zweite Ventileinrichtung 120 in die dritte Konfiguration bewegbar sind oder bewegt werden.

Die erste Betätigungseinrichtung 50 kann die erste und zweite Ventileinrichtung 60, 120 aber auch mit Druck betätigen. Wenn der erste Betätigungsanschluss 52 vom ersten Hauptzylinder 34 mit Druck beaufschlagt wird, bewegt die erste Betätigungseinrichtung 50 die erste Ventileinrichtung 60 in die erste Konfiguration und die zweite Ventileinrichtung 120 in die dritte Konfiguration. Im Speziellen kann der erste Nebenzylinder, insbesondere der erste Nebenzylinderkolben, wenn der erste Betätigungsanschluss 52 vom ersten Hauptzylinder 34 mit Druck beaufschlagt wird, die erste Ventileinrichtung 60 in die erste Konfiguration und die zweite Ventileinrichtung 120 in die dritte Konfiguration bewegen.

Darüber hinaus verbindet eine zweite Bremsleitung 118 des zweiten Bremskreises 110 die Speicherladeeinrichtung 80 mit der zweiten Ventileinrichtung 120, insbesondere dem zweiten Bremsventil. Eine weitere zweite Bremsleitung 118 des zweiten Bremskreises 110 verbindet die zweite Ventileinrichtung 120 mit dem zweiten Radzylinder 112. Zwischen der Speicherladeeinrichtung 80 und der zweiten Ventileinrichtung 120 ist an oder in der zweiten Bremsleitung 118 ein zweiter Speicher 122 angeordnet. Der zweite Speicher 122 ist mittels der zweiten Bremsleitung mit der zweiten Ventileinrichtung 120 und der Speicherladeeinrichtung 80 in Strömungsverbindung bzw. strömungsverbunden und/oder der Speicherladeeinrichtung in Strömungsrichtung nachgeordnet.

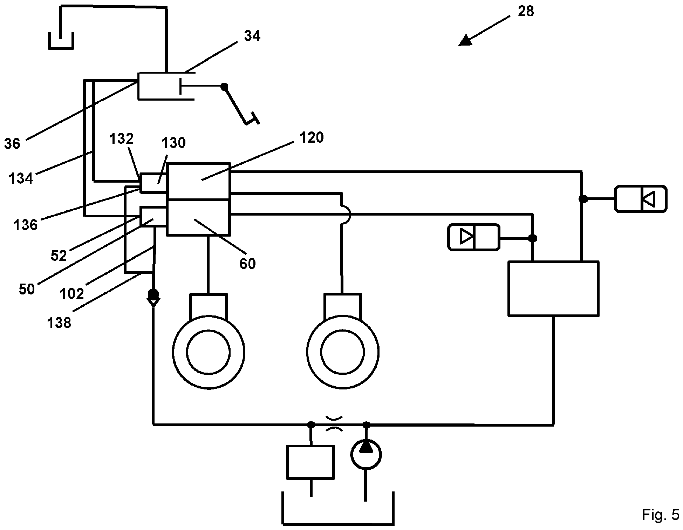

Figur 5 zeigt eine schematische Darstellung eines vierten Ausführungsbeispiels der erfindungsgemässen Fahrzeugbremsanlage 28. Die in Figur 5 gezeigte Fahrzeugbremsanlage 28 entspricht im Wesentlichen der in den Figuren 1 bis 4 gezeigten Fahrzeugbremsanlage 28, sodass im Folgenden lediglich auf Details und/oder Unterschiede eingegangen wird.

Wie in Figur 5 dargestellt, umfasst die Fahrzeugbremsanlage 28 eine zweite Betätigungseinrichtung 130 mit einem zweiten Betätigungsanschluss 132. Der erste Hauptzylinderanschluss 36 ist dabei in Strömungsverbindung mit dem zweiten Betätigungsanschluss 132. Darüber hinaus ist die zweite Betätigungseinrichtung 130 mit dem ersten Hauptzylinder 34 betreibbar oder wird mit diesem betrieben, bevorzugt einstellbar und/oder verstellbar, besonders bevorzugt betätigbar. Darüber hinaus sind, insbesondere wenn die erste und zweite Betätigungseinrichtung 50, 130 mit dem ersten Hauptzylinder 34 betätigt werden, die erste Ventileinrichtung 60 mit der ersten Betätigungseinrichtung 50 und die zweite Ventileinrichtung 120 mit der zweiten Betätigungseinrichtung 130 betreibbar oder derart betreibbar, bevorzugt einstellbar und/oder verstellbar, besonders bevorzugt betätigbar oder derart betätigbar, dass die erste Ventileinrichtung 60 in die erste Konfiguration und die zweite Ventileinrichtung 120 in die dritte Konfiguration bewegbar sind oder bewegt werden.

Der erste Hauptzylinderanschluss 36 und der zweite Betätigungsanschluss 132 sind jeweils Einlass und Auslass für das strömende Fluid, insbesondere die Hydraulikflüssigkeit. Die Fahrzeugbremsanlage 28 umfasst eine zweite Betätigungsleitung 134. Der erste Hauptzylinderanschluss 36 steht also mittels der zweiten Betätigungsleitung 134 in Verbindung mit dem zweiten Betätigungsanschluss 132. Der erste Hauptzylinder 34 ist also mit der zweiten Betätigungseinrichtung 130 in Strömungsverbindung bzw. der erste Hauptzylinder 34 ist mit der zweiten Betätigungseinrichtung 130 strömungsverbunden. Im vorliegenden Ausführungsbeispiel ist der erste Hauptzylinderanschluss 36 mit dem ersten und zweiten Betätigungsanschluss 52, 132 verbunden. Dabei kann beispielsweise die zweite Betätigungseinrichtung 130 zur Ausübung einer Schaltkraft S auf die zweite Ventileinrichtung 120 ausgebildet sein. Die zweite Betätigungseinrichtung 130 kann beispielsweise ein zweites Druckventil, im Speziellen ein Kolben, mit dem zweiten Betätigungsanschluss umfassen, oder als das beschriebene Vorsteuerventil oder zweiter Nebenzylinder ausgebildet sein.

Die zweite Betätigungseinrichtung 130 umfasst ausserdem einen zweiten Versorgungsanschluss 136. Der zweite Versorgungsanschluss 136 ist Einlass und Auslass für das Fluid. Die Pumpe 40 ist mittels einer zweiten Versorgungsleitung 138 mit der zweiten Betätigungseinrichtung 120 verbunden. Die Pumpe 40 ist also mit der zweiten Betätigungseinrichtung 120 in Strömungsverbindung bzw. strömungsverbunden. Die erste und zweite Versorgungsleitung 102, 138 verlaufen dabei teilweise als gemeinsame Leitung, wobei in der gemeinsamen Leitung das Überdruckventil 104, das Rückschlagventil 106 und die Drossel 108 angeordnet sind. Die erste und zweite Versorgungsleitung 102, 138 können aber auch als vollständig getrennte Leitungen ausgeführt sein. Dann kann in der zweiten Versorgungsleitung 138 ein weiteres Überdruckventil 104 angeordnet sein, das sich öffnet, sollte in der zweiten Versorgungsleitung 138 ein Druck anstehen, der einen vorgegebenen Höchstdruck übersteigt. Ebenso kann in der zweiten Versorgungsleitung 102 zwischen dem zweiten Versorgungsanschluss 136 und dem weiteren Überdruckventil ein weiteres Rückschlagventil angeordnet sein. Um den Druck in der zweiten Versorgungsleitung 138 zu senken und/oder zu beschränken, kann zwischen der Pumpe 40 und dem weiteren Überdruckventil eine weitere Drossel, insbesondere ein Drosselventil angeordnet sein.

Figur 6 zeigt eine schematische Darstellung eines fünften Ausführungsbeispiels der erfindungsgemässen Fahrzeugbremsanlage 28. Die in Figur 6 gezeigte Fahrzeugbremsanlage 28 entspricht im Wesentlichen der in den Figuren 1 bis 5 gezeigten Fahrzeugbremsanlage 28, sodass im Folgenden lediglich auf Details und/oder Unterschiede eingegangen wird.

Wie in Figur 6 gezeigt, umfasst die Fahrzeugbremsanlage 28 einen zweiten Hauptzylinder 140 mit einem zweiten Hauptzylinderanschluss 142. Der zweite Hauptzylinderanschluss 142 und der zweite Betätigungsanschluss 132 ist jeweils Einlass und Auslass für das Fluid. Somit steht der erste Hauptzylinderanschluss 36 mittels der ersten Betätigungsleitung 38 in Verbindung mit dem ersten Betätigungsanschluss 52 und der zweite Hauptzylinderanschluss 142 mittels der zweiten Betätigungsleitung 134 in Verbindung mit dem zweiten Betätigungsanschluss 132. Der zweite Hauptzylinder 140 ist also mit der zweite Betätigungseinrichtung 130 in Strömungsverbindung bzw. der zweite Hauptzylinder 140 ist mit der zweite Betätigungseinrichtung 130 strömungsverbunden. Darüber hinaus ist die zweite Betätigungseinrichtung 130 mit dem zweite Hauptzylinder 140 betreibbar oder wird mit diesem betrieben, bevorzugt einstellbar und/oder verstellbar, besonders bevorzugt betätigbar. Ausserdem ist die zweite Ventileinrichtung 120, insbesondere wenn die zweite Betätigungseinrichtung 130 mit dem zweiten Hauptzylinder 140 betätigt wird, mit der zweite Betätigungseinrichtung 130 betreibbar oder derart betreibbar, bevorzugt einstellbar und/oder verstellbar, besonders bevorzugt betätigbar oder derart betätigbar, dass die zweite Ventileinrichtung 120 in die dritte Konfiguration bewegbar ist oder bewegt wird.

Der zweite Hauptzylinder 140 umfasst eine zweite Hauptzylinderkammer 146 und einen in der zweiten Hauptzylinderkammer 146 angeordneten zweiten Hauptzylinderkolben 144. Dabei kann der zweite Hauptzylinderanschluss 142 ein Einlass und Auslass der zweiten Hauptzylinderkammer 146 sein. Der zweite Hauptzylinderkolben 144 ist in der zweiten Hauptzylinderkammer 146 durch Beaufschlagung mit Druck in eine bezogen auf die zweite Hauptzylinderkammer 146 eingefahrene und ausgefahrene Stellung bringbar. Der zweite Hauptzylinder 140, insbesondere der zweite Hauptzylinderkolben 144, kann mit einem weiteren Bremspedal 150 betätigt werden, insbesondere kann der zweite Hauptzylinder 140 durch das von einem Benutzer betätigbare weitere Bremspedal 150 betätigt werden. Der zweite Hauptzylinder 140 umfasst einen zweiten Reservoiranschluss 152. Der zweite Reservoiranschluss 152 ist Einlass und Auslass für das Fluid. Der zweite Reservoiranschluss 152 ist mit einer zweiten Reservoirleitung 154 mit dem Reservoir 72 verbunden. Der zweiten Hauptzylinder 140 ist also mit dem Reservoir 72 in Strömungsverbindung.

Wesentlich für dieses Ausführungsbeispiel ist also, dass die erste Ventileinrichtung , insbesondere wenn die erste Betätigungseinrichtung 130 mit dem ersten Hauptzylinder 140 betätigt wird, mit der ersten Betätigungseinrichtung 130 betreibbar, dass die erste Ventileinrichtung 120 in die erste Konfiguration bewegbar ist, und/oder die zweite Ventileinrichtung 120, insbesondere wenn die zweite Betätigungseinrichtung 130 mit dem zweiten Hauptzylinder 140 betätigt wird, mit der zweite Betätigungseinrichtung 130 betreibbar, dass die zweite Ventileinrichtung 120 in die dritte Konfiguration bewegbar ist. Die Fahrzeugbremsanlage 28 ist also ausgestaltet, als Reaktion auf eine Betätigung des Bremspedals 54 und/oder des weiteren Bremspedals 150, die dem jeweiligen ersten und zweiten Radzylinder 32, 112 zugeordneten vorderen und/oder hinteren Räder 14, 16 unabhängig voneinander zu bremsen. Dabei können das Bremspedal 54 und das weitere Bremspedal 150 unabhängig voneinander, aber gemeinsam oder jeweils einzeln betätigt werden.

Figur 7 zeigt eine schematische Darstellung eines sechsten Ausführungsbeispiels der erfindungsgemässen Fahrzeugbremsanlage 28. Die in Figur 7 gezeigte Fahrzeugbremsanlage 28 entspricht im Wesentlichen der in den Figuren 1 bis 6 gezeigten Fahrzeugbremsanlage 28, sodass im Folgenden lediglich auf Details und/oder Unterschiede eingegangen wird.

Der erste und zweite Hauptzylinder 34, 140, insbesondere der erste und zweite Hauptzylinderkolben 44, 144, sind in diesem Ausführungsbeispiel nur gemeinsam mit dem Bremspedal 54 betätigbar. Die Fahrzeugbremsanlage 28 ist also ausgestaltet, als Reaktion auf eine Betätigung des Bremspedals 54, die dem jeweiligen ersten und zweiten Radzylinder 32, 112 zugeordneten vorderen und/oder hinteren Räder 14, 16 gleichzeitig zu bremsen. Der erste und zweite Bremskreis 30, 110, insbesondere der erste und zweite Radzylinder 32, 112, können also als Reaktion auf eine Betätigung des Bremspedals 54, gemeinsam die dem ersten und zweiten Radzylinder 32, 112 zugeordneten vorderen und/oder hinteren Räder 14, 16 bremsen.

Dabei sind der erste und/oder zweite Hauptzylinder 34, 140 und das Reservoir 72 in der Kabine 20 und alle anderen Bauteile der der Fahrzeugbremsanlage 28 in allen anderen Teilen des Zugfahrzeugs, insbesondere am oder im Fahrgestell angeordnet.

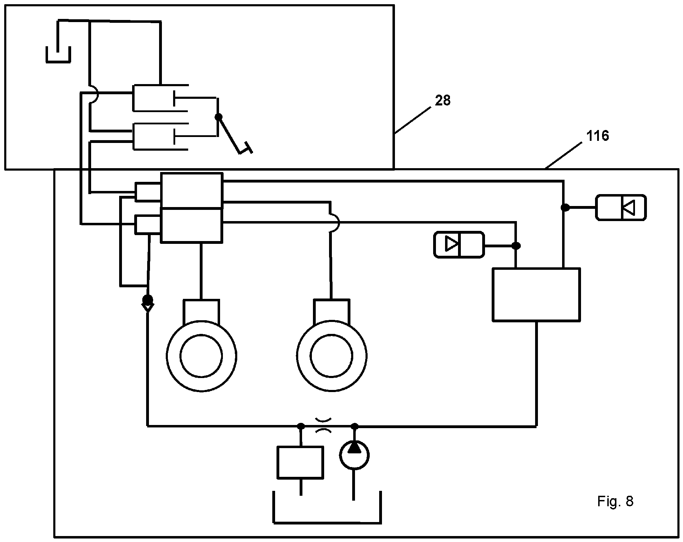

Figur 8 zeigt eine schematische Darstellung einer Anordnung einer erfindungsgemässen Fahrzeugbremsanlage 28 in einem erfindungsgemässen Zugfahrzeug 10. Die in Figur 8 gezeigte Fahrzeugbremsanlage 28 entspricht im Wesentlichen der in den Figuren 1 bis 7 gezeigten Fahrzeugbremsanlage 28 und Zugfahrzeug 10, sodass im Folgenden lediglich auf Details und/oder Unterschiede eingegangen wird. Nur der erste und/oder zweite Hauptzylinder und das Reservoir, sowie insbesondere die zugehörigen Leitungen sind in der Kabine 20 angeordnet.

Alle anderen Bestandteile der Fahrzeugbremsanlage sind am, insbesondere im, Fahrgestell angeordnet.

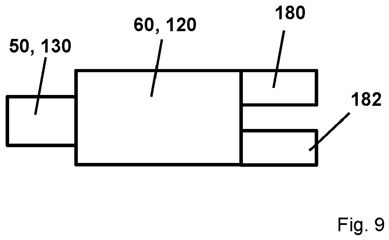

Figur 9 zeigt eine schematische Darstellung der ersten oder zweiten Betätigungseinrichtung mit der jeweiligen zugeordneten Ventileinrichtung 60. Die in Figur 9 gezeigten Details der Fahrzeugbremsanlage 28 entsprechen im Wesentlichen der in den Figuren 1 bis 8 gezeigten Fahrzeugbremsanlage 28 bzw. dem Zugfahrzeug 10, sodass im Folgenden lediglich auf Details und/oder Unterschiede eingegangen wird.

Die erste Ventileinrichtung (60) enthält ein erstes Rückstellelement 180 zur Rückstellung in die zweite Konfiguration. Darüber hinaus enthält die erste Ventileinrichtung (60) ein zweites Rückstellelement (182) zur Rückstellung in die zweite Konfiguration. Die zweite Ventileinrichtung 120 kann ein erstes Rückstellelement 180 zur Rückstellung in die vierte Konfiguration aufweisen. Darüber hinaus kann die zweite Ventileinrichtung 120 ein zweites Rückstellelement 182 zur Rückstellung in die vierte Konfiguration aufweisen.

Vorteilhafterweise wird dadurch bei leichter Betätigung des Bremspedals 54 und/oder des weiteren Bremspedals 150 der Fluidstrom unterbrochen, wobei jede weitere Bewegung Druck aufbaut und die erste und/oder zweite Ventileinrichtung 60, 120 betätigt werden.

## Patentansprüche

1. Fahrzeugbremsanlage, umfassend:
einen ersten Hauptzylinder (34) mit einem ersten Hauptzylinderanschluss (36), eine erste Betätigungseinrichtung (50) mit einem ersten Betätigungsanschluss (52), wobei die erste Betätigungseinrichtung (50) als ein erster Nebenzylinder ausgebildet ist, der eine erste Nebenzylinderkammer und einen in der ersten Nebenzylinderkammer angeordneten ersten Nebenzylinderkolben umfasst, und der erste Betätigungsanschluss ein Einlass und Auslass der ersten Nebenzylinderkammer des ersten Nebenzylinders ist, wobei der erste Hauptzylinderanschluss (36) in Strömungsverbindung mit dem ersten Betätigungsanschluss (52) ist, und die erste Betätigungseinrichtung (50) mit dem ersten Hauptzylinder (34) betreibbar ist,
einen ersten Bremskreis (30), der zwischen einer Pumpe und einem ersten Radzylinder vorgesehen ist, wobei die Pumpe im ersten Bremskreis (30) betreibbar ist um Druck zu erzeugen und ein Fluid innerhalb des ersten Bremskreises (30) zu bewegen, und im ersten Bremskreis (30) eine erste Ventileinrichtung (60) vorgesehen ist, wobei die erste Ventileinrichtung (60) zwischen einer ersten Konfiguration, in der eine Strömungsverbindung zwischen der Pumpe (40) und dem ersten Radzylinder (32) hergestellt ist, und einer zweiten Konfiguration beweglich ist, in der eine Strömungsverbindung zwischen der Pumpe (40) und dem ersten Radzylinder (32) verhindert ist, und die erste Ventileinrichtung (60) mit der ersten Betätigungseinrichtung (50) derart betreibbar ist, dass die erste Ventileinrichtung (60) mit dem ersten Nebenzylinder, wenn der erste Betätigungsanschluss vom ersten Hauptzylinder mit Druck beaufschlagt wird, in die erste Konfiguration bewegbar ist,
**dadurch gekennzeichnet, dass**
die erste Ventileinrichtung (60, 120) ein erstes Rückstellelement (180) und ein zweites Rückstellelement (182) zur Rückstellung in die zweite Konfiguration aufweist.

2. Fahrzeugbremsanlage nach Anspruch 1, **dadurch gekennzeichnet, dass** die Fahrzeugbremsanlage (28) einen zweiten Bremskreis (110) umfasst, der zwischen der Pumpe (40) und einem zweiten Radzylinder (112) vorgesehen ist, wobei die Pumpe (40) im zweiten Bremskreis (110) betreibbar ist, um Druck zu erzeugen und das Fluid innerhalb des zweiten Bremskreises (110) zu bewegen.

3. Fahrzeugbremsanlage nach Anspruch 2, **dadurch gekennzeichnet, dass** im ersten und zweiten Bremskreis (30, 110) die erste Ventileinrichtung (60) vorgesehen ist, wobei die erste Ventileinrichtung(60) zwischen einer ersten Konfiguration, in der eine Strömungsverbindung zwischen der Pumpe (40) und dem ersten und zweiten Radzylinder (32, 112) hergestellt ist, und einer zweiten Konfiguration beweglich ist, in der eine Strömungsverbindung zwischen der Pumpe (40) und dem ersten und zweiten Radzylinder (32, 112) verhindert ist, und die erste Ventileinrichtung (60) ist mit der ersten Betätigungseinrichtung (50) derart betreibbar, dass die erste Ventileinrichtung (60) in die erste Konfiguration bewegbar ist.

4. Fahrzeugbremsanlage nach Anspruch 2, **dadurch gekennzeichnet, dass** im zweiten Bremskreis (110) eine zweite Ventileinrichtung (120) vorgesehen ist, wobei zweite Ventileinrichtung (120) zwischen einer dritten Konfiguration, in der eine Strömungsverbindung zwischen der Pumpe (40) und dem zweiten Radzylinder (112) hergestellt ist, und einer vierten Konfiguration beweglich ist, in der eine Strömungsverbindung zwischen der Pumpe (40) und dem zweiten Radzylinder (112) verhindert ist.

5. Fahrzeugbremsanlage nach Anspruch 4, **dadurch gekennzeichnet, dass** die erste und zweite Ventileinrichtung (60, 120) mit der ersten Betätigungseinrichtung (50) derart betreibbar ist, dass die erste Ventileinrichtung (60) in die erste Konfiguration und die zweite Ventileinrichtung (120) in die dritte Konfiguration bewegbar ist.

6. Fahrzeugbremsanlage nach Anspruch 4, **dadurch gekennzeichnet, dass** die Fahrzeugbremsanlage (28) eine zweite Betätigungseinrichtung (130) mit einem zweiten Betätigungsanschluss (132) umfasst, wobei der erste Hauptzylinderanschluss (36) in Strömungsverbindung mit dem zweiten Betätigungsanschluss (132) ist, und die zweite Betätigungseinrichtung (130) mit dem ersten Hauptzylinder (34) betreibbar ist, wobei die erste Ventileinrichtung (60) mit der ersten Betätigungseinrichtung (50) derart betreibbar ist und die zweite Ventileinrichtung (120) mit der zweiten Betätigungseinrichtung (130) derart betreibbar ist, dass die erste Ventileinrichtung (60) in die erste Konfiguration und die zweite Ventileinrichtung (120) in die dritte Konfiguration bewegbar ist.

7. Fahrzeugbremsanlage nach Anspruch 4, **dadurch gekennzeichnet, dass** die Fahrzeugbremsanlage (28) einen zweiten Hauptzylinder (140) mit einem zweiten Hauptzylinderanschluss (142) und eine zweite Betätigungseinrichtung (130) mit einem zweiten Betätigungsanschluss (132) umfasst, wobei der zweite Hauptzylinderanschluss (142) in Strömungsverbindung mit dem zweiten Betätigungsanschluss (132) ist, und die zweite Betätigungseinrichtung (130) mit dem zweiten Hauptzylinder (140) betreibbar ist, und die erste Ventileinrichtung (60) mit der ersten Betätigungseinrichtung (50) derart betreibbar ist, dass die erste Ventileinrichtung (60) in die erste Konfiguration bewegbar ist und/oder die zweite Ventileinrichtung (120) mit der zweiten Betätigungseinrichtung (130) derart betreibbar ist, dass die zweite Ventileinrichtung (120) in die dritte Konfiguration bewegbar ist oder bewegt wird.

8. Fahrzeugbremsanlage nach mindestens einem der vorangehenden Ansprüche, **dadurch gekennzeichnet, dass** die erste Betätigungseinrichtung (50) einen ersten Versorgungsanschluss (100) und/oder die zweite Betätigungseinrichtung (130) einen zweiten Versorgungsanschluss (136) aufweisen.

9. Fahrzeugbremsanlage nach Anspruch 8, **dadurch gekennzeichnet, dass** der erste und/oder zweite Versorgungsanschluss (100, 136) mittels einer ersten Versorgungsleitung (102) mit der Pumpe (40) strömungsverbunden sind.

10. Fahrzeugbremsanlage nach mindestens einem der vorangehenden Ansprüche, **dadurch gekennzeichnet, dass** der erste Hauptzylinder (34) einen ersten Reservoiranschluss (70) umfasst, wobei der erste Hauptzylinder (34) mittels des ersten Reservoiranschlusses (70) mit einem Reservoir (72) strömungsverbunden ist.

11. Fahrzeugbremsanlage nach Anspruch 10, **dadurch gekennzeichnet, dass** der zweite Hauptzylinder (140) einen zweiten Reservoiranschluss (152) umfasst, wobei der zweite Hauptzylinder (140) mittels des zweiten Reservoiranschlusses (152) mit dem Reservoir (72) strömungsverbunden ist.

12. Fahrzeugbremsanlage nach mindestens einem der vorangehenden Ansprüche 4 bis 11, **dadurch gekennzeichnet, dass** die zweite Ventileinrichtung (60, 120) ein erstes Rückstellelement (180) zur Rückstellung in die vierte Konfiguration aufweist.

13. Fahrzeugbremsanlage nach Anspruch 12, **dadurch gekennzeichnet, dass** die zweite Ventileinrichtung (60, 120) ein zweites Rückstellelement (182) zur Rückstellung in die vierte Konfiguration aufweist.

14. Landwirtschaftliches Zugfahrzeug, umfassend eine Fahrzeugbremsanlage (28) nach einem der Ansprüche 1 bis 13.

15. Landwirtschaftliches Zugfahrzeug nach Anspruch 14, **dadurch gekennzeichnet, dass** das Zugfahrzeug (10) eine Kabine (20) und ein Fahrgestell umfasst, wobei die Kabine (20) am Fahrgestell angeordnet ist.

## Claims

1. Vehicle brake system, comprising:
a first main cylinder (34) with a first main cylinder connection (36),
a first actuating device (50) with a first actuating connection (52), wherein the first actuating device (50) is formed as a first auxiliary cylinder which comprises a first auxiliary cylinder chamber and a first auxiliary cylinder piston arranged in the first auxiliary cylinder chamber, and the first actuating connection is an inlet and outlet of the first auxiliary cylinder chamber of the first auxiliary cylinder, wherein the first main cylinder connection (36) is in flow connection with the first actuating connection (52), and the first actuating device (50) is operable with the first main cylinder (34),
a first brake circuit (30) which is provided between a pump and a first wheel cylinder, wherein the pump in the first brake circuit (30) is operable to generate pressure and to move a fluid within the first brake circuit (30), and a first valve device (60) is provided in the first brake circuit (30), wherein the first valve device (60) is movable between a first configuration, in which a flow connection is produced between the pump (40) and the first wheel cylinder (32), and a second configuration, in which a flow connection between the pump (40) and the first wheel cylinder (32) is prevented, and the first valve device (60) is operable with the first actuating device (50) in such a manner that, when the first actuating connection is acted upon with pressure by the first main cylinder, the first valve device (60) is movable with the first auxiliary cylinder into the first configuration,
**characterized in that**
the first valve device (60, 120) has a first restoring element (180) and a second restoring element (182) for restoring into the second configuration.

2. Vehicle brake system according to Claim 1, **characterized in that** the vehicle brake system (28) comprises a second brake circuit (110) which is provided between the pump (40) and a second wheel cylinder (112), wherein the pump (40) is operable in the second brake circuit (110) to generate pressure and to move the fluid within the second brake circuit (110).

3. Vehicle brake system according to Claim 2, **characterized in that** the first valve device (60) is provided in the first and second brake circuit (30, 110), wherein the first valve device (60) is movable between a first configuration, in which a flow connection is produced between the pump (40) and the first and second wheel cylinder (32, 112), and a second configuration, in which a flow connection between the pump (40) and the first and second wheel cylinder (32, 112) is prevented, and the first valve device (60) is operable with the first actuating device (50) in such a manner that the first valve device (60) is movable into the first configuration.

4. Vehicle brake system according to Claim 2, **characterized in that** a second valve device (120) is provided in the second brake circuit (110), wherein the second valve device (120) is movable between a third configuration, in which a flow connection is produced between the pump (40) and the second wheel cylinder (112), and a fourth configuration, in which a flow connection between the pump (40) and the second wheel cylinder (112) is prevented.

5. Vehicle brake system according to Claim 4, **characterized in that** the first and second valve device (60, 120) is operable with the first actuating device (50) in such a manner that the first valve device (60) is movable into the first configuration and the second valve device (120) into the third configuration.

6. Vehicle brake system according to Claim 4, **characterized in that** the vehicle brake system (28) comprises a second actuating device (130) with a second actuating connection (132), wherein the first main cylinder connection (36) is in flow connection with the second actuating connection (132), and the second actuating device (130) is operable with the first main cylinder (34), wherein the first valve device (60) is operable with the first actuating device (50) in such a manner, and the second valve device (120) is operable with the second actuating device (130) in such a manner, that the first valve device (60) is movable into the first configuration and the second valve device (120) into the third configuration.

7. Vehicle brake system according to Claim 4, **characterized in that** the vehicle brake system (28) comprises a second main cylinder (140) with a second main cylinder connection (142) and a second actuating device (130) with a second actuating connection (132), wherein the second main cylinder connection (142) is in flow connection with the second actuating connection (132), and the second actuating device (130) is operable with the second main cylinder (140), and the first valve device (60) is operable with the first actuating device (50), in such a manner that the first valve device (60) is movable into the first configuration and/or the second valve device (120) is operable with the second actuating device (130) in such a manner that the second valve device (120) is movable or is moved into the third configuration.

8. Vehicle brake system according to at least one of the preceding claims, **characterized in that** the first actuating device (50) has a first supply connection (100) and/or the second actuating device (130) has a second supply connection (136).

9. Vehicle brake system according to Claim 8, **characterized in that** the first and/or second supply connection (100, 136) are flow-connected by means of a first supply line (102) to the pump (40).

10. Vehicle brake system according to at least one of the preceding claims, **characterized in that** the first main cylinder (34) comprises a first reservoir connection (70), wherein the first main cylinder (34) is flow-connected by means of the first reservoir connection (70) to a reservoir (72).

11. Vehicle brake system according to Claim 10, **characterized in that** the second main cylinder (140) comprises a second reservoir connection (152), wherein the second main cylinder (140) is flow-connected by means of the second reservoir connection (152) to the reservoir (72) .

12. Vehicle brake system according to at least one of the preceding Claims 4 to 11, **characterized in that** the second valve device (60, 120) has a first restoring element (180) for restoring into the fourth configuration.

13. Vehicle brake system according to Claim 12, **characterized in that** the second valve device (60, 120) has a second restoring element (182) for restoring into the fourth configuration.

14. Agricultural tractor, comprising a vehicle brake system (28) according to one of Claims 1 to 13.

15. Agricultural tractor according to Claim 14, **characterized in that** the tractor (10) comprises a cabin (20) and a chassis, wherein the cabin (20) is arranged on the chassis.

## Revendications

1. Système de freinage de véhicule, comprenant :
un premier maître-cylindre (34) pourvu d'un premier raccordement de maître-cylindre (36),
un premier dispositif d'actionnement (50) pourvu d'un premier raccordement d'actionnement (52), dans lequel le premier dispositif d'actionnement (50) est réalisé sous la forme d'un premier cylindre asservi qui comprend une première chambre de cylindre asservi et un premier piston de cylindre asservi, disposé dans la première chambre de piston asservi, et le premier raccordement d'actionnement est une entrée et une sortie de la première chambre de cylindre asservi du premier cylindre asservi, dans lequel le premier raccordement de maître-cylindre (36) est en communication fluidique avec le premier raccordement d'actionnement (52), et le premier dispositif d'actionnement (50) peut fonctionner avec le premier maître-cylindre (34),
un premier circuit de freinage (30) qui est prévu entre une pompe et un premier cylindre de roue, dans lequel la pompe peut fonctionner dans le premier circuit de freinage (30) pour générer de la pression et pour déplacer un fluide à l'intérieur du premier circuit de freinage (30), et un premier dispositif de soupape (60) est prévu dans le premier circuit de freinage (30), dans lequel le premier dispositif de soupape (60) est mobile entre une première configuration dans laquelle une communication fluidique est établie entre la pompe (40) et le premier cylindre de roue (32) et une deuxième configuration dans laquelle une communication fluidique entre la pompe (40) et le premier cylindre de roue (32) est empêchée, et le premier dispositif de soupape (60) peut fonctionner avec le premier dispositif d'actionnement (50) de telle sorte que le premier dispositif de soupape (60) avec le premier cylindre asservi peut être déplacé dans la première configuration lorsque le premier raccordement d'actionnement est mis sous pression par le premier maître-cylindre,
**caractérisé en ce que**
le premier dispositif de soupape (60, 120) présente un premier élément de rappel (180) et un deuxième élément de rappel (182) pour le retour à la deuxième configuration.

2. Système de freinage de véhicule selon la revendication 1, **caractérisé en ce que** le système de freinage de véhicule (28) comprend un deuxième circuit de freinage (110) qui est prévu entre la pompe (40) et un deuxième cylindre de roue (112), dans lequel la pompe (40) peut fonctionner dans le deuxième circuit de freinage (110) pour générer de la pression et pour déplacer le fluide à l'intérieur du deuxième circuit de freinage (110).

3. Système de freinage de véhicule selon la revendication 2, **caractérisé en ce que** le premier dispositif de soupape (60) est prévu dans le premier et le deuxième circuit de freinage (30, 110), dans lequel le premier dispositif de soupape (60) est mobile entre une première configuration dans laquelle une communication fluidique est établie entre la pompe (40) et le premier et le deuxième cylindre de roue (32, 112) et une deuxième configuration dans laquelle une communication fluidique entre la pompe (40) et le premier et le deuxième cylindre de roue (32, 112) est empêchée, et le premier dispositif de soupape (60) peut fonctionner avec le premier dispositif d'actionnement (50) de telle sorte que le premier dispositif de soupape (60) peut être déplacé vers la première configuration.

4. Système de freinage de véhicule selon la revendication 2, **caractérisé en ce qu'**un deuxième dispositif de soupape (120) est prévu dans le deuxième circuit de freinage (110), dans lequel le deuxième dispositif de soupape (120) est mobile entre une troisième configuration dans laquelle une communication fluidique est établie entre la pompe (40) et le deuxième cylindre de roue (112) et une quatrième configuration dans laquelle une communication fluidique entre la pompe (40) et le deuxième cylindre de roue (112) est empêchée.

5. Système de freinage de véhicule selon la revendication 4, **caractérisé en ce que** le premier et le deuxième dispositif de soupape (60, 120) peuvent fonctionner avec le premier dispositif d'actionnement (50) de telle sorte que le premier dispositif de soupape (60) peut être déplacé vers la première configuration et le deuxième dispositif de soupape (120) peut être déplacé vers la troisième configuration.

6. Système de freinage de véhicule selon la revendication 4, **caractérisé en ce que** le système de freinage de véhicule (28) comprend un deuxième dispositif d'actionnement (130) pourvu d'un deuxième raccordement d'actionnement (132), dans lequel le premier raccordement de maître-cylindre (36) est en communication fluidique avec le deuxième raccordement d'actionnement (132), et le deuxième dispositif d'actionnement (130) peut fonctionner avec le premier maître-cylindre (34), dans lequel le premier dispositif de soupape (60) peut fonctionner avec le premier dispositif d'actionnement (50) et le deuxième dispositif de soupape (120) peut fonctionner avec le deuxième dispositif d'actionnement (130) de telle sorte que le premier dispositif de soupape (60) peut être déplacé vers la première configuration et le deuxième dispositif de soupape (120) peut être déplacé vers la troisième configuration.

7. Système de freinage de véhicule selon la revendication 4, **caractérisé en ce que** le système de freinage de véhicule (28) comprend un deuxième maître-cylindre (140) pourvu d'un deuxième raccordement de maître-cylindre (142) et un deuxième dispositif d'actionnement (130) pourvu d'un deuxième raccordement d'actionnement (132), dans lequel le deuxième raccordement de maître-cylindre (142) est en communication fluidique avec le deuxième raccordement d'actionnement (132), et le deuxième dispositif d'actionnement (130) peut fonctionner avec le deuxième maître-cylindre (140), et le premier dispositif de soupape (60) peut fonctionner avec le premier dispositif d'actionnement (50) de telle sorte que le premier dispositif de soupape (60) peut être déplacé vers la première configuration et/ou le deuxième dispositif de soupape (120) peut fonctionner avec le deuxième dispositif d'actionnement (130) de telle sorte que le deuxième dispositif de soupape (120) peut être déplacé ou est déplacé vers la troisième configuration.

8. Système de freinage de véhicule selon au moins l'une des revendications précédentes, **caractérisé en ce que** le premier dispositif d'actionnement (50) présente un premier raccordement d'alimentation (100) et/ou le deuxième dispositif d'actionnement (130) présente un deuxième raccordement d'alimentation (136).

9. Système de freinage de véhicule selon la revendication 8, **caractérisé en ce que** le premier et/ou le deuxième raccordement d'alimentation (100, 136) sont reliés à la pompe (40) en communication fluidique au moyen d'une première conduite d'alimentation (102).

10. Système de freinage de véhicule selon au moins l'une des revendications précédentes, **caractérisé en ce que** le premier maître-cylindre (34) comprend un premier raccordement de réservoir (70), dans lequel le premier maître-cylindre (34) est relié en communication fluidique à un réservoir (72) au moyen du premier raccordement de réservoir (70).

11. Système de freinage de véhicule selon la revendication 10, **caractérisé en ce que** le deuxième maître-cylindre (140) comprend un deuxième raccordement de réservoir (152), dans lequel le deuxième maître-cylindre (140) est relié en communication fluidique à un réservoir (72) au moyen du deuxième raccordement de réservoir (152).

12. Système de freinage de véhicule selon au moins l'une des revendications précédentes 4 à 11, **caractérisé en ce que** le deuxième dispositif de soupape (60, 120) présente un premier élément de rappel (180) pour le retour à la quatrième configuration.

13. Système de freinage de véhicule selon la revendication 12, **caractérisé en ce que** le deuxième dispositif de soupape (60, 120) présente un deuxième élément de rappel (182) pour le retour à la quatrième configuration.

14. Véhicule tracteur agricole, comprenant un système de freinage de véhicule (28) selon l'une quelconque des revendications 1 à 13.

15. Véhicule tracteur agricole selon la revendication 14, **caractérisé en ce que** le véhicule tracteur (10) comprend une cabine (20) et un châssis, la cabine (20) étant disposée sur le châssis.
